# EUROPEAN PATENT SPECIFICATION

(11) **EP 3 947 496 B1**
(45) Date of publication and mention of the grant of the patent: **07.01.2026**
(21) Application number: 20720947.9
(22) Date of filing: 01.04.2020
(51) Int. Cl.: C08G 18/08, B33Y 10/00, B33Y 30/00, B33Y 70/00, B33Y 80/00, C08G 18/32, C08G 18/38, C08G 18/72, C08G 18/73, C08G 18/75, C08G 18/78, C08G 18/79, C08L 75/02, B29C 64/106, B29C 64/209, B29C 64/241

(54) **ADDITIVE MANUFACTURING OF AN OBJECT MADE OF A POLYUREA MATERIAL**
GENERATIVE FERTIGUNG EINES GEGENSTANDES AUS EINEM POLYHARNSTOFFMATERIAL
FABRICATION ADDITIVE D'UN OBJET À BASE DE MATIÈRE POLYURÉE

(30) Priority: 01.04.2019 US 201962827299 P
(43) Date of publication of application: 09.02.2022
(73) Proprietor: Stratasys Ltd., 7612401 Rehovot (IL)
(72) Inventor: KUNO, Lev, 9987500 Tzur-Hadassah (IL); LEVY, Avraham, 4937554 Petach-Tikva (IL); BENISVY, Laurent, 3825146 Hedera (IL)
(74) Representative: Zwicker, Jörk
(86) International application number: PCT/IL2020/050395
(87) International publication number: WO 2020/202153

(56) References cited:
- WO-A1-2018/106822
- US-A1- 2017 321 083
- US-A1- 2019 054 681

## Description

### FIELD AND BACKGROUND OF THE INVENTION

The present invention, in some embodiments thereof, relates to additive manufacturing and, more particularly, but not exclusively, to additive manufacturing of three-dimensional objects which comprise, in at least a portion thereof, a polyurea material, and to modeling material formulations which form a polyurea material and which are usable in additive manufacturing.

Additive manufacturing is generally a process in which a three-dimensional (3D) object is manufactured utilizing a computer model of the objects. Such a process is used in various fields, such as design related fields for purposes of visualization, demonstration and mechanical prototyping, as well as for rapid manufacturing (RM).

The basic operation of any AM system consists of slicing a three-dimensional computer model into thin cross sections, translating the result into two-dimensional position data and feeding the data to control equipment which manufacture a three-dimensional structure in a layerwise manner.

Various AM technologies exist, amongst which are stereolithography, digital light processing (DLP), and three-dimensional (3D) printing, 3D inkjet printing in particular. Such techniques are generally performed by layer by layer deposition and solidification of one or more building materials, typically photopolymerizable (photocurable) materials.

In three-dimensional printing processes, for example, a building material is dispensed from a printing head having a set of nozzles to deposit layers on a supporting structure. Depending on the building material, the layers may then solidify, harden or be cure, optionally using a suitable device.

Various three-dimensional printing techniques exist and are disclosed in, *e.g.,* U.S. Patent Nos. 6,259,962, 6,569,373, 6,658,314, 6,850,334, 7,183,335, 7,209,797, 7,225,045, 7,300,619, 7,479,510, 7,500,846, 7,962,237 and 9,031,680, all of the same Assignee.

A printing system utilized in additive manufacturing may include a receiving medium and one or more printing heads. The receiving medium can be, for example, a fabrication tray that may include a horizontal surface to carry the material dispensed from the printing head. The printing head may be, for example, an ink jet head having a plurality of dispensing nozzles arranged in an array of one or more rows along the longitudinal axis of the printing head. The printing head may be located such that its longitudinal axis is substantially parallel to the indexing direction. The printing system may further include a controller, such as a microprocessor to control the printing process, including the movement of the printing head according to a pre-defined scanning plan (e.g., a CAD configuration converted to a Stereo Lithography (STL) format and programmed into the controller). The printing head may include a plurality of jetting nozzles. The jetting nozzles dispense material onto the receiving medium to create the layers representing cross sections of a 3D object.

In addition to the printing head, there may be a source of curing energy, for curing the dispensed building material. The curing energy is typically radiation, for example, UV radiation.

Additionally, the printing system may include a leveling device for leveling and/or establishing the height of each layer after deposition and at least partial solidification, prior to the deposition of a subsequent layer.

The building materials may include modeling materials and support materials, which form the object and the temporary support constructions supporting the object as it is being built, respectively.

The modeling material(s) are deposited to produce the desired object/s and the support material(s) are used, with or without modeling material(s), to provide support structures for specific areas of the object during building and assure adequate vertical placement of subsequent object layers, e.g., in cases where objects include overhanging features or shapes such as curved geometries, negative angles, voids, and so on.

Both modeling and support materials are preferably liquid at the working temperature at which they are dispensed, and subsequently harden or solidify, typically upon exposure to a curing condition (e.g., curing energy), to form the required layer shape. After printing completion, support structures are removed to reveal the final shape of the fabricated 3D object.

Several additive manufacturing processes allow additive formation of objects using more than one modeling material, also referred to as "multi-material" AM processes. For example, U.S. Patent Application having Publication No. 2010/0191360, by the present Assignee, discloses a system which comprises a solid freeform fabrication apparatus having a plurality of printing heads, a building material supply apparatus configured to supply a plurality of building materials to the fabrication apparatus, and a control unit configured for controlling the fabrication and supply apparatus. The system has several operation modes. In one mode, all printing heads operate during a single building scan cycle of the fabrication apparatus. In another mode, one or more of the printing heads is not operative during a single building scan cycle or part thereof.

In a 3D inkjet printing process such as Polyjet^{™} (Stratasys Ltd., Israel), the building material is selectively jetted from one or more printing heads and deposited onto a fabrication tray in consecutive layers according to a pre-determined configuration as defined by a software file.

U.S. Patent No. 9,227,365, by the present assignee, discloses methods and systems for solid freeform fabrication of shelled objects, constructed from a plurality of layers and a layered core constituting core regions and a layered shell constituting envelope regions.

The Polyjet^{™} technology allows control over the position and composition of each voxel (volume pixel), which affords enormous design versatility and digital programming of multi-material structures. Other advantages of the Polyjet^{™} technology is the very high printing resolution (e.g. up to 14 µm layer height), and the ability to print multiple materials simultaneously, in a single object. This multi-material 3D printing process often serves for fabrication of complex parts and structures that are comprised of elements having different stiffness, performance, color or transparency. New ranges of materials, programmed at the voxel level, can be created by the PolyJet^{™} printing process, using only few starting materials.

In order to be compatible with most of the commercially-available printing heads utilized in a 3D inkjet printing system, the uncured building material should feature the following characteristics: a relatively low viscosity, which depends, in part on the printing heads of the system (e.g., Brookfield Viscosity of up to 90 cps, or up to 50 cps, or up to 35 cps, typically from 8 to 50 cps or from 8 to 35 cps) at the working (e.g., jetting) temperature; a surface tension of from about 25 to about 55 dyne/cm, preferably from about 25 to about 40 dyne/cm; a Newtonian liquid behavior; and a high reactivity to a selected curing condition, to enable fast solidification of the jetted layer upon exposure to a curing condition, of no more than 1 minute, preferably no more than 20 seconds. Additional requirements include low boiling point solvents (if solvents are used), e.g., featuring boiling point lower than 200 or lower than 190 °C, yet characterized preferably by low evaporation rate at the working (e.g., jetting) temperature, and, if the building material includes solid particles, these should feature an average size of no more than 2 microns.

Current PolyJet^{™} technology offers the capability to use a range of curable (e.g., polymerizable) materials that provide polymeric materials featuring a variety of properties, ranging, for example, from stiff and hard materials (e.g., curable formulations marketed as the Vero^{™} Family materials) to soft and flexible materials (e.g., curable formulations marketed as the Tango^{™} and Agilus^{™} families), and including also objects made using Digital ABS, which contain a multi-material made of two starting materials (e.g., RGD515 & RGD535/531), and simulate properties of engineering plastic. Most of the currently practiced PolyJet materials are curable materials which harden or solidify upon exposure to radiation, mostly UV radiation and/or heat.

In order to expand 3D printing and make it more versatile, new processes should be developed to enable deposition of a broader range of materials, including engineering polymers with various characteristics. Engineering polymers are materials with superior thermal stability and mechanical properties that make them valuable in the manufacturing of structural elements.

Polyurea is a polymer which is obtained by reacting a polyisocyanate component and a polyamine component through step-growth polymerization. This reaction is fast, occurs at room temperature, typically does not require a catalyst and is relatively moisture insensitive. The resulting polymer is characterized by high tensile strength (may reach 40 MPa and even higher) and high elongation (may reach 500 % and higher), and is typically characterized also by good adhesion to surfaces such as steel and concrete. These features render polyurea highly useful for coating large area surfaces, particularly when tough, chemically and structurally resistant coatings are desirable. Due to the high reactivity and moisture insensitivity that characterize its formation, polyurea in typically used in coating of surfaces and other applications by spraying or spray molding. The fast curing allows many coating layers to be built up quickly.

However, the use of polyurea in additive manufacturing, and in 3D inkjet printing methodologies in particular, is limited mostly by the extremely fast reaction time, which requires laborious technique even when performed in a mold, let alone in a 3D inkjet printing process, where clogging of the inkjet nozzles and other parts of the 3D inkjet system may occur. Some of the reactants that provide polyurea are also characterized by high viscosity which is not suitable in 3D inkjet printing.

Those reactants that are currently in use in the industry for forming polyurea and which have low viscosity and hence jettability, and which can be used in 3D inkjet printing, are typically aromatic di-and tri-isocyanates. However, these materials are typically highly toxic, volatile and potentially carcinogenic, and thus do not meet most of the health and safety standards of both the working environment and the market.

U.S. Patent Application Publication No. 2019/054681 discloses thermosetting compositions for use in additive manufacturing, which comprise a polyisocyanate prepolymer and a polyamine prepolymer. The compositions are characterized by viscosities of more than 1000 centipoises.

U.S. Patent Application Publication No. 2017/321083 discloses compositions and methods of additive manufacturing, which can be usable for forming polyurea materials by employing 2-pack compositions; one comprising an amine-containing material and one comprising an isocyanate-containing material.

WO 2018/106822 describes a method of forming a three-dimension object from reactive components that form a thermoset material that includes a urethane and/or urea-containing polymer.

### SUMMARY OF THE INVENTION

According to an aspect of some embodiments of the present invention there is provided a method of additive manufacturing of a three-dimensional object which comprises, in at least a portion thereof, a polyurea-containing material, the method comprising sequentially forming a plurality of layers in a configured pattern corresponding to the shape of the object, thereby forming the object,
wherein the formation of each of at least a few of the layers comprises dispensing a modeling material formulation which comprises at least one isocyanate-containing material and at least one amine-containing material, to thereby form a modeling material comprises the polyurea-containing material,
wherein the at least one isocyanate-containing material comprises at least one polyisocyanate material and the at least one amine-containing material comprises at least one aromatic polyamine material.

According to some of any of the embodiments described herein, the polyurea-containing material is a thermosetting polymeric material.

According to some of any of the embodiments described herein, the at least one polyisocyanate material features an average number of isocyanate groups of at least 2.

According to some of any of the embodiments described herein, the average number of isocyanate groups ranges from 2 to 4.

According to some of any of the embodiments described herein, the at least one polyisocyanate material comprises at least one non-aromatic, e.g., aliphatic, alicyclic and/or heteroalicyclic, polyisocyanate material.

According to some of any of the embodiments described herein, the at least one polyisocyanate material comprises at least 60 % by weight of at least one non-aromatic, e.g., aliphatic, alicyclic and/or heteroalicyclic, polyisocyanate material, of the total weight of isocyanate-containing materials in the modeling material formulation.

According to some of any of the embodiments described herein, the at least one isocyanate-containing material further comprises at least one aromatic polyisocyanate material and/or at least one mono-functional isocyanate material.

According to some of any of the embodiments described herein, the at least one aromatic polyisocyanate material features an average number of isocyanate groups of at least 2.

According to some of any of the embodiments described herein, an amount of the aromatic polyisocyanate material does not exceed 40 % by weight of the total weight of isocyanate-containing materials in the modeling material formulation.

According to some of any of the embodiments described herein, the at least one aromatic polyamine material features an average number of amine groups of at least 2.

According to some of any of the embodiments described herein, the at least one aromatic polyamine material features an average number of amine functional groups of about 2.

According to some of any of the embodiments described herein, an amount of the at least one aromatic polyamine material is at least 60 % by weight of the total weight of the amine-containing materials in the modeling material formulation.

According to some of any of the embodiments described herein, the modeling material formulation further comprises at least one of an aliphatic polyamine material, an alicyclic polyamine material and a mono-functional amine.

According to some of any of the embodiments described herein, an amount of the aliphatic and/or alicyclic polyamine material does not exceed 40 % by weight of the total weight of amine-containing materials in the modeling material formulation.

According to some of any of the embodiments described herein, the modeling material further comprises an additional material, the additional material being non-reactive towards the at least one isocyanate-containing material and the at least one amine-containing material.

According to some of any of the embodiments described herein, the additional material is an aprotic material.

According to some of any of the embodiments described herein, the additional material is a curable material.

According to some of any of the embodiments described herein, the curable material is a multifunctional curable material which features at least one of: a viscosity at room temperature of less than 15 centipoises or less than 10 centipoises; and a flash point at least 10 °C higher than a temperature applied to the formulation during the method.

According to some of any of the embodiments described herein, the additional material is a UV-curable material.

According to some of any of the embodiments described herein, the additional material is a non-curable material.

According to some of any of the embodiments described herein, an amount of the additional material is no more than 40 % by weight of the total weight of a formulation comprising same.

According to some of any of the embodiments described herein, the modeling material formulation further comprises a thiol-containing material and/or a hydroxy-containing material.

According to some of any of the embodiments described herein, the thiol-containing material and/or the hydroxy-containing material is a multi-functional material comprising an average number of thiol and/or hydroxy groups of at least 2.

According to some of any of the embodiments described herein, a total weight of the thiol-containing material and/or the hydroxy-containing material is no more than 25 % by weight of the total weight of a formulation comprising same.

According to some of any of the embodiments described herein, the modeling material formulation is a multi-part modeling material formulation which comprises at least a first sub-formulation and a second sub-formulation, wherein the first sub-formulation comprises at least one of the polyisocyanate materials and the second sub-formulation comprises at least one of the aromatic polyamine materials.

According to some of any of the embodiments described herein, a sub-formulation that comprises a polyisocyanate material does not comprise a polyamine material, and wherein a sub-formulation that comprises a polyamine material does not comprise a polyisocyanate material.

According to some of any of the embodiments described herein, an amount of the at least one polyisocyanate material in the first sub-formulation comprises is at least 60 % by weight of the total weight of the first sub-formulation.

According to some of any of the embodiments described herein, the first sub-formulation further comprises one or more of:
an aromatic polyisocyanate material, in an amount of no more than 40 % by weight of the first sub-formulation;
a monofunctional isocyanate material, in an amount of no more than 40 % by weight of the first sub-formulation; and
an additional material being non-reactive towards the polyisocyanate material and the aromatic polyamine material, as described in any of the respective embodiments and any combination thereof, in an amount of no more than 25 % by weight of the total weight of the first sub-formulation.

According to some of any of the embodiments described herein, an amount of the at least one polyamine material is at least 60 % by weight of the total weight of the second sub-formulation.

According to some of any of the embodiments described herein, the second sub-formulation further comprises one or more of:
an aliphatic and/or alicyclic polyamine material, in an amount of no more than 40 % by weight of the second sub-formulation;
a monofunctional amine material, in an amount of no more than 40 % by weight of the formulation;
an additional material being non-reactive towards the at least one polyamine material, as described in any of the respective embodiments and any combination thereof, in an amount of no more than 40 % by weight of the total weight of the second sub-formulation; and
a thiol-containing material and/or a hydroxy-containing material, as described in any of the respective embodiments and any combination thereof, in an amount of not more than 25 % by weight of the total weight of the second sub-formulation.

According to some of any of the embodiments described herein, the dispensing is such that a mol ratio of an average number of isocyanate groups in the at least one polyisocyanate material and an average number of amine groups in polyamine materials in the at least one amine-containing material is from about 1.2:1 to about 1:1.2.

According to some of any of the embodiments described herein, a viscosity of the modeling material formulation or of each of the sub-formulations described herein is no more than 90 centipoises at the temperature of the dispensing.

According to some of any of the embodiments described herein, the additive manufacturing is three-dimensional inkjet printing and the dispensing of the modeling material formulation is via at least one printing head, nozzle and/or array of nozzles.

According to some of any of the embodiments described herein, a temperature of the printing head, nozzle and/or array of nozzles ranges from 20 to 100 °C, or from 20 to 80 °C.

According to some of any of the embodiments described herein, the modeling material formulation is a multi-part formulation as described herein in any of the respective embodiments and any combination thereof, and the dispensing comprises dispensing the first sub-formulation from a first printing head, nozzle and/or array of nozzles and dispensing the second sub-formulation from a second printing head, nozzle and/or array of nozzles.

According to some of any of the embodiments described herein, the method further comprises exposing each of the dispensed layers to heat.

According to some of any of the embodiments described herein, the exposing comprises applying infrared radiation.

According to some of any of the embodiments described herein, applying the infrared radiation is by performing a plurality of scans (e.g., 4) of the infrared radiation over the layer.

According to some of any of the embodiments described herein, applying the infrared radiation is at a power of at least 750 watts.

According to some of any of the embodiments described herein, applying the infrared radiation is by at least two infrared light sources.

According to an aspect of some embodiments of the present invention there is provided a three-dimensional object comprising, in at least a portion thereof, a polyurea material.

According to some of any of the embodiments described herein, the object comprises in at least one portion thereof a first polyurea material and in at least one another portion thereof a second polyurea material, wherein the first and second polyurea materials differ from one another by at least one mechanical property.

According to some of any of the embodiments described herein, the at least one mechanical property is selected from Izod Impact resistance, Shore A hardness, Shore D hardness, elongation at break, heat deflection temperature, Tensile strength, glass transition temperature (Tg), etc.

According to some of any of the embodiments described herein, the object is prepared by the method as described herein in any of the respective embodiments and any combination thereof.

According to an aspect of some embodiments of the present invention there is provided a modeling material formulation comprising at least one polyisocyanate material and at least one aromatic polyamine material, the formulation being usable in additive manufacturing a three-dimensional object which comprises, in at least a portion thereof, a polyurea material.

According to some of any of the embodiments described herein, the additive manufacturing is 3D inkjet printing.

According to some of any of the embodiments described herein, the formulation features a viscosity of no more than 90 centipoises at 68 °C.

According to some of any of the embodiments described herein, the formulation is as described in any of the respective embodiments and any combination thereof.

According to an aspect of some embodiments of the present invention there is provided a kit comprising the modeling material formulation as described herein in any of the respective embodiments and any combination thereof.

According to some of any of the embodiments described herein, the at least one polyisocyanate material and the at least one polyamine material are packaged individually within the kit.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIGs. 1A-D are schematic illustrations of an additive manufacturing system according to some embodiments of the invention.
FIGs. 2A-2C are schematic illustrations of printing heads according to some embodiments of the present invention.
FIGs. 3A-3B are schematic illustrations demonstrating coordinate transformations according to some embodiments of the present invention.
FIG. 4 is a simplified flow chart presenting an exemplary method of 3D inkjet printing of an object according to some embodiments of the present invention.

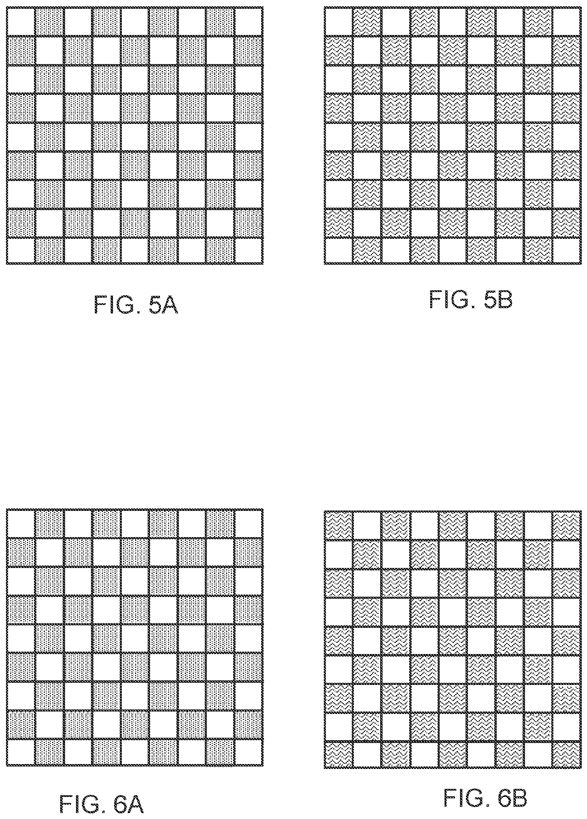

FIGs. 5A and 5B present schematic illustrations of bitmaps in embodiments of the invention in which a "Drop on Drop" printing protocol is employed. A bitmap suitable for the deposition of the first composition is illustrated in FIG. 5A and a bitmap suitable for the deposition of the second composition is illustrated in FIG. 5B. When the droplets of both compositions have the same or approximately the same weight, the bitmaps are useful for a 50:50 (or 1:1) w/w ratio. White boxes represent vacant locations, dotted boxes represent droplets of the first composition and wavy boxes represent droplets of the second composition. Each patterned (wavy/dotted) box represents a pixel (e.g., one composition droplet) in a layer. Both compositions can be deposited at the same location, but at different times, during movement of the printing head.
FIGs. 6A and 6B present schematic illustrations of bitmaps in embodiments of the invention in which a "side-by-side" printing protocol is employed. A bitmap suitable for the deposition of the first composition is illustrated in FIG. 6A and a bitmap suitable for the deposition of the second composition is illustrated in FIG. 6B. When the droplets of both compositions have the same or approximately the same weight, the bitmaps are useful for a 50:50 (or 1:1) w/w ratio. White boxes represent vacant locations, dotted boxes represent droplets of the first composition and wavy boxes represent droplets of the second composition. Each patterned (wavy/dotted box represents a pixel (e.g., one formulation droplet). A drop of the first composition (dotted boxes) is deposited adjacent to a drop of the second composition.
FIG. 7 is a bar graph presenting the Izod Impact values of objects prepared using Formulation 2 (F2), Formulation 1 (F1), Formulation 4 (F4), Formulation 3 (F3), Formulation 6 (F6), Formulation 5 (F5), as presented in Tables 3 and 4.
FIG. 8 is a bar graph presenting the Tg values, obtained from DMA measurements of objects prepared using Formulation 2 (F2), Formulation 1 (F1), Formulation 4 (F4), Formulation 3 (F3), Formulation 6 (F6), Formulation 5 (F5), as presented in Tables 3 and 4.
FIGs. 9A-C present photographs of objects made of Formulation 2 (FIG. 9A), Formulation 3 (FIG. 9B) and Formulation 7 (FIG. 9C), as presented in Table 3.
FIG. 10 presents a photograph of an object printed in a DM mode using Formula 17, as presented in Table 3, after exposure to a curing condition.
FIG. 11 presents a photograph of an object printed in a DM mode using Formula 17, as presented in Table 3, after exposure to a curing condition and to a post-curing treatment at 130 °C for 16 hours.

### DESCRIPTION OF SPECIFIC EMBODIMENTS OF THE INVENTION

The present invention, in some embodiments thereof, relates to additive manufacturing and, more particularly, but not exclusively, to additive manufacturing of three-dimensional objects which comprise, in at least a portion thereof, a polyurea material, and to modeling material formulations which form a polyurea material and which are usable in additive manufacturing.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

In a search for methodologies that would allow additive manufacturing of three-dimensional objects having in at least a portion thereof a polyurea material, while circumventing and overcoming the limitations associated with forming such a material, such as the extremely fast reaction time and high toxicity of the reactants, the present inventors have designed and practiced novel formulations that can be successfully used in forming polyurea materials by additive manufacturing processes, and which meet the AM process and system requirements, particularly requirements of 3D inkjet printing process and systems, and provide an environmental friendly and safe manufacturing process and products.

While currently used methodologies for forming polyurea materials are based on a reaction between a polyisocyanate material and a polyamine material, the extremely fast reaction, high reaction rates, and the high viscosity and/or low safety profile of the reactants, substantially limit the use of polyurea materials in additive manufacturing processes and particularly in 3D inkjet printing where clogging of components in the system must be avoided.

The present inventors have uncovered that using aromatic polyamines for forming a polyurea material, instead of the currently practiced aliphatic or alicyclic polyamines, substantially reduces the reaction rate with a polyisocyanate, and thus facilitates the use of these materials in additive manufacturing. The present inventors further uncovered that non-aromatic (e.g., aliphatic and/or alicyclic) polyisocyanate materials can be beneficially used in combination with aromatic polyamine materials for forming polyurea materials in additive manufacturing, and thus can replace the commonly practiced aromatic polyisocyanates which are extremely hazardous materials. Moreover, the present inventors have uncovered that a reaction between aromatic polyisocyanates and aliphatic polyamine materials is too fast and cannot be performed successfully in additive manufacturing processes such as 3D inkjet printing, when these are the main polyisocyanate and polyamine material (e.g., more than 50 % by weight for each).

The present inventors have designed formulations that feature properties such as viscosity, surface tension and a reaction rate of polyurea formation, that are suitable for use in additive manufacturing such as 3D inkjet printing, namely, which are characterized by suitable jettability when dispensed and by suitable reactivity upon being dispensed.

The present inventors have further shown that the properties of a polyurea material formed by a formulation that comprises a polyisocyanate material (e.g., an aliphatic or alicyclic polyisocyanate material) and an aromatic polyamine material can be tailored as desired by selecting the type and amount of the polyisocyanate material and/or the polyamine material in the formulations used in additive manufacturing of a polyurea-containing 3D object. Using aromatic polyamines further provides hardened modeling materials that feature HDT and Tg values that are much higher compared to materials formed while using non-aromatic polyamines.

Thus, the formulations disclosed herein, and the additive manufacturing process employing same, provide three-dimensional objects containing a polyurea material, and, in some embodiments, the objects may include two of more different polyurea materials, which differ from one another by one or more mechanical and/or physical properties. Therefore, 3D objects featuring a fine control of the properties in different portions of the object can be tailored.

Embodiments of the present invention relate to modeling material formulations that are suitable for use in additive manufacturing of a three-dimensional (3D) object that comprises in at least a portion thereof a polyurea material, to kits comprising such formulations, and to additive manufacturing processes employing these formulations.

The method and system of the present embodiments manufacture three-dimensional objects based on computer object data in a layerwise manner by forming a plurality of layers in a configured pattern corresponding to the shape of the objects. The computer object data can be in any known format, including, without limitation, a Standard Tessellation Language (STL) or a StereoLithography Contour (SLC) format, Virtual Reality Modeling Language (VRML), Additive Manufacturing File (AMF) format, Drawing Exchange Format (DXF), Polygon File Format (PLY) or any other format suitable for Computer-Aided Design (CAD).

Each layer is formed by additive manufacturing apparatus which scans a two-dimensional surface and patterns it. While scanning, the apparatus visits a plurality of target locations on the two-dimensional layer or surface, and decides, for each target location or a group of target locations, whether or not the target location or group of target locations is to be occupied by building material formulation, and which type of building material formulation is to be delivered thereto. The decision is made according to a computer image of the surface.

In preferred embodiments of the present invention the AM comprises three-dimensional printing, more preferably three-dimensional inkjet printing. In these embodiments a building material formulation is dispensed from a dispensing head having a set of nozzles to deposit building material formulation in layers on a supporting structure. The AM apparatus thus dispenses building material formulation in target locations which are to be occupied and leaves other target locations void. The apparatus typically includes a plurality of dispensing heads, each of which can be configured to dispense a different building material formulation. Thus, different target locations can be occupied by different building material formulations. The types of building material formulations can be categorized into two major categories: modeling material formulation(s) and support material formulation(s). The support material formulation(s) serve as a supporting matrix or construction for supporting the object or object parts during the fabrication process and/or other purposes, e.g., providing hollow or porous objects. Support constructions may additionally include elements made of a modeling material formulation, e.g. for further support strength.

The modeling material formulation is generally a composition which is formulated for use in additive manufacturing and which is able to form a three-dimensional object on its own, *i.e.,* without having to be mixed or combined with any other substance.

The final three-dimensional object is made of the modeling material formulation or a combination of modeling material formulations or modeling and support material formulations or modification thereof (e.g., following curing). All these operations are well-known to those skilled in the art of solid freeform fabrication.

In some exemplary embodiments of the invention an object is manufactured by dispensing two or more different modeling material formulations or sub-formulations, each material formulation or sub-formulation from a different dispensing head or nozzle of the AM. The material formulations or sub-formulations are optionally and preferably deposited in layers during the same pass of the printing heads. The material formulations/sub-formulations and combination of material formulations/sub-formulations within the layer are selected according to the desired properties of the object.

Herein throughout, the term "object" describes a final product of the additive manufacturing. This term refers to the product obtained by a method as described herein, after removal of the support material, if such has been used as part of the building material. The "object" therefore essentially consists (at least 95 weight percents) of a hardened (e.g., cured) modeling material.

The term "object" as used herein throughout refers to a whole object or a part thereof.

An object according to the present embodiments is such that at least a part or a portion thereof comprises a polyurea material, as defined herein. The object may be such that several parts or portions thereof are made of a polyurea material, or such that is entirely made of a polyurea material. The polyurea material can be the same or different in the different parts or portions, and, for each part, portion or the entire object made of a polyurea material, the polyurea material can be the same or different within the portion, part or object. When different polyurea materials are used, they can differ in their chemical composition and/or mechanical properties and/or physical, as further explained hereinafter.

The phrase "polyurea material" encompasses a polymeric material which comprises in at least a portion thereof, repeating urea-based backbone units. In some embodiments, the repeating urea-based backbone units are formed by step-growth addition of polyamine units, as described in further detail hereinafter, to polyisocyanate units, as described in further detail hereinafter, and in their most simplified form can be collectively represented by the following Formula I, where the portions deriving from the polyisocyanate and from the polyamine are also shown: 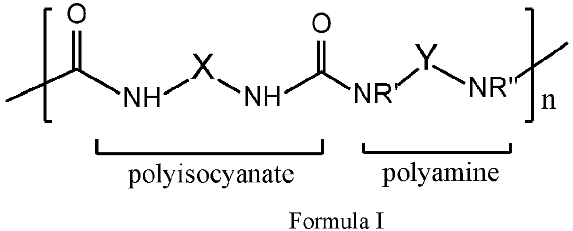 wherein X and Y are moieties derived from the polyisocyanate and polyamine, respectively, and are as defined hereinbelow.

In its non-simplified form, a polyurea material may include branched structures, which may be obtained, for example, when the functionality of the polyisocyanate and/or the polyamine is higher than 2, and/or upon covalent and/or non-covalent interactions between linear polyurea chains that form a 3D network of cross-linked polymeric chains (via, for example, interactions between carboxyl groups in one linear chain and amine groups of another linear chain). The degree of branching and/or cross-linking and the nature of the X and Y groups in a polyurea material affect the physical and/or mechanical properties of the polymeric polyurea material.

Herein throughout, the phrases "building material formulation", "uncured building material", "uncured building material formulation", "building material" and other variations therefore, collectively describe the materials that are dispensed to sequentially form the layers, as described herein. This phrase encompasses uncured materials dispensed so as to form the object, namely, one or more uncured modeling material formulation(s), and uncured materials dispensed so as to form the support, namely uncured support material formulations.

Herein throughout, the phrase "cured modeling material" or "hardened modeling material" describes the part of the building material that forms the object, as defined herein, upon exposing the dispensed building material to curing, and, optionally, if a support material has been dispensed, also upon removal of the cured support material, as described herein. The cured modeling material can be a single cured material or a mixture of two or more cured materials, depending on the modeling material formulations used in the method, as described herein.

The phrase "cured modeling material" or "cured modeling material formulation" can be regarded as a cured building material wherein the building material consists only of a modeling material formulation (and not of a support material formulation). That is, this phrase refers to the portion of the building material, which is used to provide the final object.

Herein throughout, the phrase "modeling material formulation", which is also referred to herein interchangeably as "modeling formulation", "model formulation" "model material formulation" or simply as "formulation", describes a part or all of the building material which is dispensed so as to form the object, as described herein. The modeling material formulation is an uncured modeling formulation (unless specifically indicated otherwise), which, upon exposure to curing condition, forms the object or a part thereof.

In some embodiments of the present invention, a modeling material formulation is formulated for use in three-dimensional inkjet printing (e.g., feature rheological, thermal and physical properties that meet the requirements of a 3D inkjet system and process) and is able to form a three-dimensional object on its own, *i.e.,* without having to be mixed or combined with any other substance.

An uncured building material can comprise one or more modeling material formulations and/or sub-formulations, and can be dispensed such that different parts of the object are made, upon curing, of different cured modeling material formulations/sub-formulations or different combinations thereof, and hence are made of different cured modeling materials or different mixtures of cured modeling materials.

The formulations forming the building material (modeling material formulations and support material formulations) comprise one or more curable materials, which, when exposed to a curing condition, form hardened (cured) material.

Herein throughout, a "curable material" is a compound (typically a monomeric or oligomeric compound, yet optionally a polymeric material) which, when exposed to a curing condition, as described herein, solidifies or hardens to form a cured material. Curable materials are typically polymerizable materials, which undergo polymerization and/or cross-linking when exposed to a suitable curing condition (e.g., a suitable energy source).

A curable material, according to the present embodiments, also encompasses materials which harden or solidify (cure) without being exposed to a curing energy, but rather to a curing condition (for example, upon exposure to a chemical reagent, or upon contacting another curable material), or simply upon exposure to the environment.

The terms "curable" and "solidifyable" as used herein are interchangeable.

The polymerization can be, for example, free-radical polymerization, cationic polymerization or anionic polymerization, and each can be induced when exposed to curing energy such as, for example, radiation, heat, etc., as described herein.

The polymerization can alternatively be, for example, step-growth polymerization or any other addition-type polymerization, which can be induced upon contacting two curable materials, which are also referred to herein as polymeric precursors or reactants, optionally, but no obligatory, along with exposure to a curing condition (e.g., curing energy).

In some of any of the embodiments described herein, a curable material is a photopolymerizable material, which polymerizes and/or undergoes cross-linking upon exposure to radiation, as described herein, and in some embodiments the curable material is a UV-curable material, which polymerizes and/or undergoes cross-linking upon exposure to UV radiation, as described herein.

In some embodiments, a curable material as described herein is a photopolymerizable material that polymerizes via photo-induced free-radical polymerization. Alternatively, the curable material is a photopolymerizable material that polymerizes via photo-induced cationic polymerization.

In some embodiments, a curable material is or comprises a first polyurea precursor, which is polymerizable via addition polymerization upon contacting a second polyurea precursor.

In some of any of the embodiments described herein, a curable material can be a monomer, an oligomer or a short-chain polymer, each being polymerizable and/or cross-linkable as described herein.

In some of any of the embodiments described herein, when a curable material is exposed to a curing condition, it hardens (undergoes curing) by any one, or combination, of chain elongation and cross-linking.

In some of any of the embodiments described herein, a curable material is a monomer or a mixture of monomers which can form a polymeric material upon a polymerization reaction, when exposed to a curing condition at which the polymerization reaction occurs. Such curable materials are also referred to herein as monomeric curable materials.

In some of any of the embodiments described herein, a curable material is an oligomer or a mixture of oligomers which can form a polymeric material upon a polymerization reaction, when exposed to a curing condition at which the polymerization reaction occurs. Such curable materials are also referred to herein as oligomeric curable materials.

In some of any of the embodiments described herein, a curable material is a polymer or a mixture of polymers which can form a polymeric or co-polymeric material upon a polymerization reaction, by chain extension or addition, or which cross-link, or is cross-linked by, other curable materials, when exposed to a curing condition at which the polymerization reaction occurs. Such curable materials are also referred to herein as polymeric curable materials.

In some of any of the embodiments described herein, the curable materials comprise two polyurea precursors which react with one another in an addition, step-growth polymerization, as described herein, and the curing condition comprises contacting the precursors with one another.

In some of any of the embodiments described herein, a curable material, whether monomeric, oligomeric or polymeric, can be a mono-functional curable material or a multifunctional curable material.

Herein, a mono-functional curable material comprises one functional group that can undergo polymerization when exposed to a curing condition.

A multi-functional curable material comprises two or more, e.g., 2, 3, 4 or more, functional groups that can undergo polymerization when exposed to a curing condition. Multi-functional curable materials can be, for example, di-functional, tri-functional or tetra-functional curable materials, which comprise 2, 3 or 4 groups that can undergo polymerization, respectively. The two or more functional groups in a multi-functional curable material are typically linked to one another by a linking moiety, as defined herein. When the linking moiety is an oligomeric or polymeric moiety, the multi-functional group is an oligomeric or polymeric multi-functional curable material. Multi-functional curable materials can undergo polymerization when subjected to a curing condition and/or act as cross-linkers.

The method of the present embodiments manufactures three-dimensional objects in a layerwise manner by forming a plurality of layers in a configured pattern corresponding to the shape of the objects, as described herein.

The final three-dimensional object is made of the modeling material or a combination of modeling materials or a combination of modeling material/s and support material/s or modification thereof (e.g., following curing). All these operations are well-known to those skilled in the art of solid freeform fabrication.

According to an aspect of some embodiments of the present invention there is provided a method of additive manufacturing of a three-dimensional object which comprises, in at least a portion thereof (as described in further detail hereinafter) a polyurea-containing material, as defined herein.

The method is generally effected by sequentially forming a plurality of layers in a configured pattern corresponding to the shape of the object, such that formation of each of at least a few of said layers, or of each of said layers, comprises dispensing a building material (uncured) which comprises one or more modeling material formulation(s), and, optionally, but not obligatory, exposing the dispensed modeling material to a curing condition to thereby form a cured modeling material, as described in further detail hereinafter.

According to embodiments of the present invention, the one or more modeling material formulation(s) comprise(s) two or more polyurea precursors that react with one another upon contacting one another, to form a polyurea material, as described herein. The two or more polyurea precursors comprise at least one polyisocyanate material and at least one polyamine material, as described in further detail hereinafter.

According to some embodiments of any of the embodiments of the present invention the additive manufacturing is 3D inkjet printing.

In some exemplary embodiments of the invention an object is manufactured by dispensing a building material (uncured) that comprises two or more different modeling material formulations and/or sub-formulations, each modeling material formulation and/or sub-formulation from a different dispensing (e.g., printing) head or from a different nozzle or a different array of nozzles of an inkjet printing apparatus. The modeling material formulations and/or sub-formulations are optionally and preferably deposited in layers during the same pass of the dispensing (e.g., printing) heads. The modeling material formulations and/or sub-formulations and/or combination of formulations and/or sub-formulations within the layer are selected according to the desired properties of the object, and as further described in detail hereinbelow.

The phrase "digital materials", abbreviated as "DM", as used herein and in the art, describes a combination of two or more materials on a microscopic scale or voxel level such that the printed zones of a specific material are at the level of few voxels, or at a level of a voxel block. Such digital materials may exhibit new properties that are affected by the selection of types of materials and/or the ratio and relative spatial distribution of two or more materials.

In exemplary digital materials, the modeling material of each voxel or voxel block, obtained upon curing, is independent of the modeling material of a neighboring voxel or voxel block, obtained upon curing, such that each voxel or voxel block may result in a different model material and the new properties of the whole part are a result of a spatial combination, on the voxel level, of several different model materials.

The phrase "digital material formulations", as used herein and in the art, describes a combination of two or more material formulations on a pixel level or voxel level such that pixels or voxels of different material formulations are interlaced with one another over a region. Such digital material formulations may exhibit new properties that are affected by the selection of types of material formulations and/or the ratio and relative spatial distribution of two or more material formulations.

As used herein, a "voxel" of a layer refers to a physical three-dimensional elementary volume within the layer that corresponds to a single pixel of a bitmap describing the layer. The size of a voxel is approximately the size of a region that is formed by a building material, once the building material is dispensed at a location corresponding to the respective pixel, leveled, and solidified.

Herein throughout, whenever the expression "at the voxel level" is used in the context of a different material and/or properties, it is meant to include differences between voxel blocks, as well as differences between voxels or groups of few voxels. In preferred embodiments, the properties of the whole part are a result of a spatial combination, on the voxel block level, of several different model materials.

### The Modeling Material Formulation:

The present inventors have designed a modeling material formulation that provides a polyurea material, while meeting the requirement of an additive manufacturing method and system, and particularly the requirements of 3D inkjet printing. The modeling material formulation comprises a first and a second polyurea precursors, that react with one another (e.g., upon being dispensed) to form a polyurea material as described herein.

As discussed hereinabove, a polyurea material is typically obtained by step-growth polymerization upon contacting a polyisocyanate and a polyamine, as the first and second polyurea precursors, respectively. Commonly used polyisocyanates, such as aromatic polyisocyanates, are typically hazardous materials. Commonly used polyamines, particularly aliphatic amines, react with aromatic or other polyisocyanates in a very fast reaction time, which renders the use of such materials in additive manufacturing highly complex, if not impossible, to perform.

The present inventors have uncovered that using aromatic polyamines, preferably in combination with non-aromatic, namely, aliphatic, alicyclic or heteroalicyclic, polyisocyanates, results in a polymerization reaction (polyurea formation) that occurs at a reaction rate that allows to efficiently use such materials in additive manufacturing such as 3D inkjet printing. The present inventors have devised accordingly novel modeling material formulations that can be successfully utilized in additive manufacturing of a 3D object that comprises, in at least a portion thereof, a polyurea material, and particularly in an additive manufacturing such as 3D inkjet printing.

Herein, a reaction rate of the polyurea formation reaction that is suitable for use in additive manufacturing such as 3D inkjet printing, is such that no more than 20 %, or no more than 10 %, by mol, of the polyurea precursors interact with one another before or during the dispensing of the modeling material formulation, and at the temperature at which the formulation is dispensed (e.g., 60-70 °C). Alternatively, a reaction rate of the polyurea formation that is suitable for use in additive manufacturing such as 3D inkjet printing, is such that a viscosity of the modeling material formulation changes by no more than 20 %, preferably by no more than 10 %, during the dispensing of the modeling material formulation, and at the temperature at which the formulation is dispensed (e.g., 60-70 °C).

### Polyisocyanate Materials:

Herein throughout, and in the art, the term "polyisocyanate" or "polyisocyanate material" describes a material that comprises, or is consisted of, a polyisocyanate moiety, whereby a polyisocyanate moiety is a chemical moiety that comprises a plurality (e.g., more than one, namely, two or more) of isocyanate groups. The term "polyisocyanate" is also referred to herein interchangeably as "multi-functional isocyanate", for comprising a plurality (e.g., more than one, namely, two or more) of functional isocyanate groups.

Polyisocyanate materials according to the present embodiments can be collectively represented by the following Formula II: 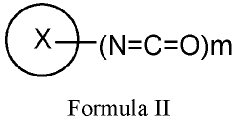
wherein m is greater than 1, and can be, for example, 2, 3, 4, etc., preferably from 2 to 10 or from 2 to 8, or from 2 to 6, or from 2 to 4; and
X is or comprises one or more aliphatic, alicyclic, heteroalicyclic, aromatic or heteroaromatic moiety/moieties, each can independently be monomeric, oligomeric or polymeric.

When X is an oligomeric or polymeric moiety, composed of a plurality (e.g., two or more) repeating units, the m isocyanate groups can be each attached to a different unit, which can be a terminal and/or non-terminal unit and/or two or more isocyanate groups can be attached to the same unit.

When X is an oligomeric or polymeric moiety, the repeating backbone units can be the same or different and each can be, for example, an aliphatic, alicyclic, heteroalicyclic, aromatic and/or heteroaromatic moiety. Organosilicon repeating units that form, for example, silicon polyether, are also contemplated.

When X is a monomeric moiety, it can comprise one or more of an aliphatic, an alicyclic, a heteroalicyclic, an aromatic and a heteroaromatic moiety.

When X comprises an aromatic or heteroaromatic moiety, the polyisocyanate is considered as an aromatic polyisocyanate. When X comprises an alicyclic moiety, the polyisocyanate is considered an alicyclic polyisocyanate. When X comprises a heteroalicyclic moiety, the polyisocyanate is considered a heteroalicyclic polyisocyanate. When X comprises solely an aliphatic moiety, the polyisocyanate is considered an aliphatic polyisocyanate.

Polyisocyanates that do not comprise an aromatic or a heteroaromatic moiety are referred to herein as non-aromatic polyisocyanates, and can be aliphatic, alicyclic or heteroalicyclic polyisocyanates, and can be both monomeric, oligomeric and polymeric.

For any of the polyisocyanates described herein, one or more of the isocyanate groups can be attached to X directly or indirectly, via a linker. The linker can be the same or different for each isocyanate group.

The linker can be, for example, a saturated or unsaturated, substituted or unsubstituted, hydrocarbon chain, optionally interrupted by one or more heteroatoms, wherein, when substituted, the substituent can be any of the substituents described herein for, for example, an alkyl. In some embodiments, the linker is an alkylene chain, optionally interrupted by one or more linking groups such as carboxy, amide, hydroxy, -O-, -S-, amine, hydrazine, hydrazide, cycloalkyl, aryl, heteroalicyclic, heteroaryl, carbamyl, ureido, guanyl, guanidyl, allophonate and the like, and further optionally substituted by one or more of the substituents described herein for, for example, an alkyl group.

When X is an aliphatic moiety, the aliphatic moiety can be, for example, a saturated or unsaturated, substituted or unsubstituted, hydrocarbon chain, optionally interrupted by one or more heteroatoms, wherein, when substituted, the substituent can be any of the substituents described herein for, for example, an alkyl. In some embodiments, the aliphatic moiety is an alkylene chain, optionally interrupted by one or more groups such as carboxy, amide, hydroxy, -O-, -S-, amine, hydrazine, hydrazide, cycloalkyl, aryl, heteroalicyclic, heteroaryl, carbamyl, ureido, guanyl, guanidyl, allophonate and the like, and further optionally substituted by one or more of the substituents described herein for, for example, an alkyl group.

When X or the linker is or comprises an allophonate group, the moiety X or the linker by itself can attribute one or more isocyanate functionalities when reacted to form polyurea.

When X is an alicyclic moiety, the alicyclic moiety can be a saturated or unsaturated, substituted or unsubstituted, cycloalkyl, as defined herein.

When X is a heteroalicyclic moiety, the heteroalicyclic moiety can be a saturated or unsaturated, substituted or unsubstituted, heteroalicyclic, as defined herein. The heteroalicyclic moiety can be, for example, a cyclic isocyanurate.

Exemplary aromatic and heteroaromatic polyisocyanates according to the present embodiments can be collectively represented by Formula IIa, or as comprising a moiety of Formula IIa: 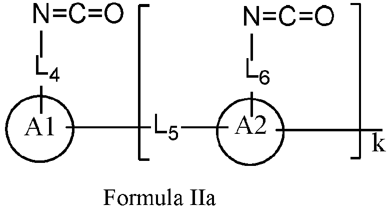 wherein:
A1 and A2 are each independently an aryl or a heteroaryl;
L₄, L₅ and L₆ are each independently a linker as described herein, or absent; and
k is 0 or is a positive integer.

In exemplary embodiments of Formula IIa, A1 and A2 are each phenyl.

In exemplary embodiments of Formula IIa, L₄ and L₆ are each absent.

In exemplary embodiments of Formula IIa, L₅ is an alkylene, preferably a short alkylene of 1 to 4 carbon atoms, for example, methylene.

In exemplary embodiments of Formula IIa, A1 and A2 are each phenyl, L₄ and L₆ are each absent, and L₅ is an alkylene, for example, methylene.

An exemplary commercially available aromatic polyisocyanate that is commonly used in the industry for forming polyurea is the one marketed by Bayer under the trade name Desmodur VL. Such an isocyanate is a polymeric material featuring, as its repeating unit, diphenylmethane diisocyanate (DPMDI).

Additional exemplary aromatic polyisocyanates include, but are not limited to, mixed aralkyl diisocyanates such as tetramethylxylyl diisocyanates, OCN-C(-CH₃)₂-C₆H₄C(CH₃)₂-NCO; phenylene diisocyanate, toluene diisocyanate (TDI), xylene diisocyanate, 1,5-naphthalene diisocyanate, chlorophenylene 2,4-diisocyanate, bitoluene diisocyanate, dianisidine diisocyanate, tolidine diisocyanate and alkylated benzene diisocyanates generally; methylene-interrupted aromatic diisocyanates such as methylenediphenyl diisocyanate, especially the 4,4'-isomer (MDI) including alkylated analogs such as 3,3'-dimethyl-4,4'-diphenylmethane diisocyanate and polymeric methylenediphenyl diisocyanate.

Non-aromatic polyisocyanates can be divided into several subcategories, typically in accordance with the nature of the X moiety (see, Formula II) to which the isocyanate groups are attached.

An exemplary non-aromatic polyisocyanate is a heteroalicyclic polyisocyanate, which is represented by Formula II, wherein X is a heteroalicyclic.

In some embodiments, the heteroalicyclic is an isocyanate-containing heteroalicyclic, which is formed of two or more isocyanate moiety that are linked together to form a 4, 5, 6, 7, 8 or more-membered ring.

Exemplary heteroalicyclic polyisocyanates include isocyanurate polyisocyanates, in which one, two or three isocyanate groups are linked, directly or via a linker L, to an isocyanurate core, as depicted in Formula IIb: 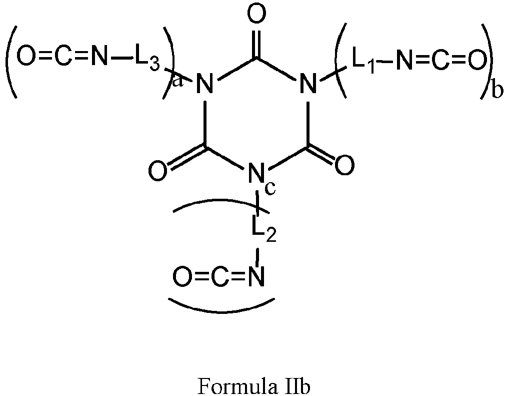 wherein L₁, L₂ and L₃ can be the same or different and each independently can be absent or a linker as described herein; and a, b and c are each independently 0 or 1, provided that a+b+c is 2 or 3. Whenever one of a, b, or c in Formula IIb is 0, the respective nitrogen atom can be substituted by a hydrogen atom or by any of the substituents described herein for an amine or amide group.

In exemplary embodiments of Formula IIb, each of a, b, and c is 1.

In exemplary embodiments of Formula IIb, L₁, L₂ and L₃ are each independently an alkylene, and in some embodiments, each alkylene is independently of 1 to 10 carbon atoms in length. In exemplary embodiments, each of L₁, L₂ and L₃ is independently an alkylene of 2 to 8, or of 2 to 6, carbon atoms in length, and in some embodiments, each of L₁, L₂ and L₃ is independently a pentamethylene (alkylene being 5 carbon atoms in length) or a hexamethylene (an alkylene being six carbon atoms in length).

In exemplary embodiments of Formula IIb, each of a, b and c is 1 and each of L₁, L₂ and L₃ is an alkylene, for example, pentamethylene.

Additional exemplary heteroalicyclic polyisocyanates in which the heteroalicyclic is an isocyanate-containing heteroalicyclic include uretdione polyisocyanates, in which one or two isocyanate groups are linked, directly or via a linker L to an uretdione core, as depicted in Formula IIc: 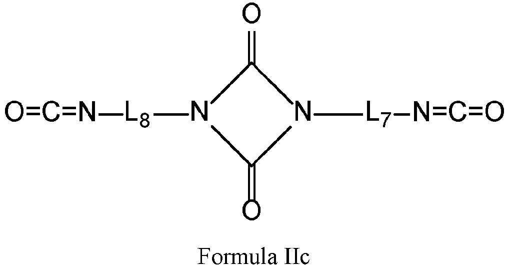 wherein L₇ and L₈ can be the same or different and each independently can be absent or a linker as described herein.

In exemplary embodiments of Formula IIc, L₇ and L₈ are each independently an alkylene, and in some embodiments, each alkylene is independently of from 1 to 10 carbon atoms in length. In exemplary embodiments, each of L₇ and L₈ is independently an alkylene of 2 to 8, or of 2 to 6, carbon atoms in length, and in some embodiments, each of L₇ and L₈ is a hexylene (hexamethylene) or a pentylene (pentamethylene), as described herein.

An exemplary such a polyisocyanate is marketed by Vencorex under the trade name Tolonate^{™} LV2.

An exemplary non-aromatic polyisocyanate is an alicyclic polyisocyanate, represented by Formula II, in which X is a cycloalkyl, and which can be represented by Formula IId: 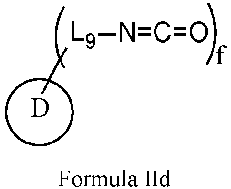
wherein D is a four-, five-, six-, seven, eight- or higher-membered alicyclic ring; f is an integer of 2 of more, for example, of 2, 3, or 4, with the maximal number of f being the number of carbon atoms forming the ring; and
L₉ is a linker as described herein, wherein the linker can be the same or different for each (L₉-N=C=O), isocyanate-containing, group.

The two of more isocyanate-containing substituents can be positioned at any carbon atoms of the ring, and the carbon atoms that are substituted by an isocyanate-containing substituent can be adjacent to one another or be separated from one another by 1, 2 or more carbon atoms.

In exemplary embodiments of Formula IId, ring D is a cyclohexane, which can adopt any conformation, and in which the isocyanate-containing substituents can be independently axial or equatorial.

In exemplary embodiments of Formula IId, f is 2.

In exemplary embodiments of Formula IId, L₉ in each of the isocyanate-containing substituents is an alkylene, and in some embodiments, each alkylene is independently of 1 to 10 carbon atoms in length. In exemplary embodiments, each of L₉ is independently an alkylene of 1 to 6, or of 1 to 4, carbon atoms in length, and in some embodiments, each of L₉ is methylene.

In some embodiments of Formula IId, carbon atoms of the cycloalkyl that are not substituted by an isocyanate-containing substituent can be substituted by any of the substituents described herein for a cycloalkyl. In exemplary embodiments, these carbon atoms are unsubstituted.

In exemplary embodiments of Formula IId, D is cycloalkyl featuring a chair conformation, f is 2, each L₉ is an alkylene such as methylene, and the isocyanate-containing substituents are equatorial and are at positions 1 and 4 of the cycloalkyl. An exemplary such a material is marketed by Mitsui as 1,4-H6XDI.

An exemplary non-aromatic polyisocyanate is an aliphatic polyisocyanate, represented by Formula II, in which X is saturated or unsaturated, substituted or unsubstituted, hydrocarbon, optionally interrupted by one or more heteroatoms, as described herein.

The hydrocarbon can be linear, in which case the polyisocyanate may comprise either one or two isocyanate groups at one or both termini of the linear hydrocarbon, and/or the polyisocyanate may comprise one or more isocyanate-containing substituents of the hydrocarbon.

The hydrocarbon can alternatively be branched, such that three or more hydrocarbons extend from a tri-functional or tetra-functional branching unit, and the polyisocyanate can comprise either one, two, or more isocyanate groups at a terminus of one, two or all of the extending hydrocarbons, and/or the polyisocyanate may comprise one or more isocyanate-containing substituents of one, two or all of the extending hydrocarbons.

In exemplary embodiments, an aliphatic polyisocyanate can be represented by Formula IIe: 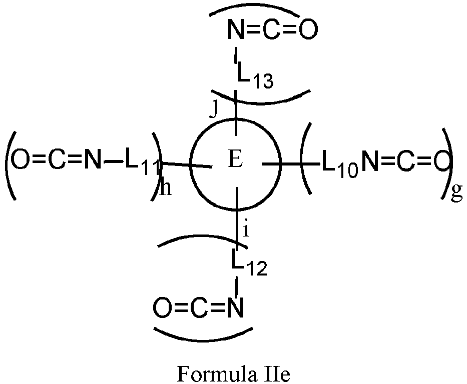
wherein L₁₀, L₁₁, L₁₂ and L₁₃ can be the same or different and each independently can be absent or a linker as described herein;
g, h, i and j are each independently 0 or 1, provided that g+h+i+j is at least 2; and
E is a linear or branched hydrocarbon, as described herein.

Whenever one of g, h, i or j in Formula IIe is 0, the respective position of the hydrocarbon can be substituted by a hydrogen atom or by any of the substituents described herein for a hydrocarbon.

In exemplary embodiments of Formula IIe, each of g and h is 1.

In exemplary embodiments of Formula IIe, each of g and h is 1 and I and j are both 0.

In exemplary embodiments of Formula IIe, L₁₀ and L₁₁ are each independently an alkylene, and in some embodiments, each alkylene is independently of 1 to 10 carbon atoms in length. In exemplary embodiments, each of L₁₀ and L₁₁ is independently an alkylene of 2 to 8, or of 2 to 6, carbon atoms in length, and in other embodiments, each of L₁₀ and L₁₁ is absent.

In exemplary embodiments of Formula IIe, each of g and h is 1 and I and j are both 0, and E is a linear hydrocarbon, interrupted by one or more heteroatoms and/or groups as described herein. In exemplary embodiments, E is a linear hydrocarbon interrupted by one or more groups such as carbamoyl, amide, ureido, oxo, and the like.

In exemplary embodiments of Formula IIe, E is a linear hydrocarbon, interrupted by an allophonate group:

-N-(C(=O)OR')-C(=O)-NR"-

in which R' and R" are as defined herein.

Such aliphatic polyisocyanates feature two isocyanate groups within the hydrocarbon chain.

In exemplary embodiments of Formula IIe, each of g and h is 1 and I and j are both 0, L10 and L11 are each an alkylene, preferably a pentamethylene or hexamethylene, and E is an allophonate group. An exemplary such material is marketed by Venorex as Tolonate^{™} X FLO 100.

Additional exemplary non-aromatic polyisocyanates that are usable in the context of the present embodiments include, but are not limited to, isophorone diisocyanate (IPDI), which is 3,3,5-trimethyl-5-isocyanato-methyl-cyclohexyl isocyanate; cyclohexylene diisocyanate, 4,4'-methylenedicyclohexyl diisocyanate (H₁₂MDI); and polymethylene isocyanates such as 1,4-tetramethylene diisocyanate, 1,5-pentamethylene diisocyanate, 1,6-hexamethylene diisocyanate (HMDI), 1,7-heptamethylene diisocyanate, 2,2,4- and 2,4,4-trimethylhexamethylene diisocyanate, 1,10-decamethylene diisocyanate and 2-methyl-1,5-pentamethylene diisocyanate.

Additional exemplary polyisocyanate materials include, but are not limited to, an isocyanate-terminated polyether diol, an isocyanate-terminated extended polyether diol, or a combination thereof. An extended polyether diol refers to a polyether diol that has been reacted with an excess of a diisocyanate resulting in an isocyanate-terminated polyether with increased molecular weight and urethane linkages in the backbone. Examples of polyether diols include Terathane^{®} polyether diols such as Terathane^{®} 200 and Terathane^{®} 650 available from Invista or the PolyTHF^{®} polyether diols available from BASF. Isocyanate-terminated polyethers can be prepared by reacting a diisocyanate and a polyether diol as described in U.S. Application Publication No. 2013/0244340.

Additional exemplary polyisocyanate materials include, but are not limited to, an isocyanate-terminated polytetramethylene ether glycol such as polytetramethylene ether glycols produced through the polymerization of tetrahydrofuran. Examples of suitable polytetramethylene ether glycols include Polymeg^{®} polyols (LyondellBasell), PolyTHF^{®} polyether diols (BASF), or Terathane^{®} polyols (Invista).

Additional exemplary polyisocyanate materials include, but are not limited to, an isocyanate-terminated polyetheramine. Examples of polyether amines include Jeffamine^{®} polyetheramines (Huntsman Corp.), and polyetheramines available from BASF. Examples of suitable polyetheramines include polyoxypropylenediamine.

Any other materials which comprise one or more polyisocyanate-derived moieties such as isocyanurate, uretdione, biuret, allophanate and combinations thereof, are contemplated herewith as polyisocyanate materials.

In some embodiments, the polyisocyanate material is selected such that it exhibits an improved stability and/or reduced toxicity (compared, for example, to currently practiced, commercially available, aromatic polyisocyanates), and is or comprises, for example, a cyanurate and/or allophonate.

According to the present embodiments, whenever a polyisocyanate material is described, it may be a single polyisocyanate material or a mixture of two or more polyisocyanate materials.

### Polyamine materials:

Herein throughout, and in the art, the term "polyamine" or "polyamine material" describes a material that comprises, or is consisted of, a polyamine moiety, whereby a polyamine moiety is a chemical moiety that comprises two or more amine groups. The term "polyamine" is also referred to herein interchangeably as "multi-functional amine", for comprising more than one, namely, two or more, functional amine groups.

Polyamine materials according to the present embodiments can be collectively represented by the following Formula III: 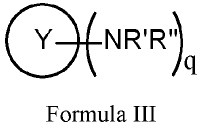
wherein q is greater than 1, and can be, for example, 2, 3, 4, etc., preferably from 2 to 10 or from 2 to 8, or from 2 to 6, or from 2 to 4, and represents a number of functional amines;
R' and R" are as described herein; and
Y is or comprises one or more aliphatic, alicyclic, heteroalicyclic, aromatic or heteroaromatic moiety/moieties, each can independently be monomeric, oligomeric or polymeric.

When Y is an oligomeric or polymeric moiety, composed of a plurality (e.g., two or more) repeating units, the q amine groups can be each attached to a different unit, which can be a terminal and/or non-terminal unit and/or two or more amine groups can be attached to the same unit.

When Y is an oligomeric or polymeric moiety, the repeating backbone units can be the same or different and each can be, for example, an aliphatic, alicyclic, heteroalicyclic, aromatic and/or heteroaromatic moiety. Organosilicon repeating units that form, for example, silicon polyether, are also contemplated.

When Y is a monomeric moiety, it can comprise one or more of an aliphatic, an alicyclic, a heteroalicyclic, an aromatic and a heteroaromatic moiety.

When Y comprises an aromatic or heteroaromatic moiety, the polyamine is considered as an aromatic amine. When Y comprises an alicyclic moiety, the polyamine is considered an alicyclic polyamine. When Y comprises a heteroalicyclic moiety, the polyamine is considered a heteroalicyclic polyamine. When Y comprises solely an aliphatic moiety, the polyamine is considered an aliphatic polyamine.

Polyamines that do not comprise an aromatic or a heteroaromatic moiety are referred to herein as non-aromatic polyamines, and can be aliphatic, alicyclic or heteroalicyclic polyamines, and can be monomeric, oligomeric or polymeric.

For any of the polyamines described herein in Formula III, the amine group can be attached to Y directly or indirectly, via a linker. The linker can be the same or different for each isocyanate group.

The linker can be, for example, a saturated or unsaturated, substituted or unsubstituted, hydrocarbon chain, optionally interrupted by one or more heteroatoms, wherein, when substituted, the substituent can be any of the substituents described herein for, for example, an alkyl. In some embodiments, the linker is an alkylene chain, optionally interrupted by one or more groups such as carboxy, amide, hydroxy, -O-, -S-, amine, hydrazine, hydrazide, cycloalkyl, aryl, heteroalicyclic, heteroaryl, carbamyl, ureido, guanyl, guanidyl, and the like, and further optionally substituted by one or more of the substituents described herein for, for example, an alkyl group.

When Y is an aliphatic moiety, the aliphatic moiety can be, for example, a saturated or unsaturated, substituted or unsubstituted, hydrocarbon chain, optionally interrupted by one or more heteroatoms, wherein, when substituted, the substituent can be any of the substituents described herein for, for example, an alkyl. In some embodiments, the aliphatic moiety is an alkylene chain, optionally interrupted by one or more groups such as carboxy, amide, hydroxy, -O-, -S-, amine, hydrazine, hydrazide, cycloalkyl, aryl, heteroalicyclic, heteroaryl, carbamyl, ureido, guanyl, guanidyl, and the like, and further optionally substituted by one or more of the substituents described herein for, for example, an alkyl group.

When Y is an alicyclic moiety, the alicyclic moiety can be a saturate or unsaturated, substituted or unsubstituted, cycloalkyl, as defined herein.

When Y is a heteroalicyclic moiety, the heteroalicyclic moiety can be a saturated or unsaturated, substituted or unsubstituted, heteroalicyclic, as defined herein.

Exemplary non-aromatic (aliphatic, alicyclic or heteroalicyclic) polyamines include, but are not limited to, ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4- and/or 2,4,4-trimethyl-1,6-diamino-hexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotolulene diamine, 2,4'- and/or 4,4'-di amino-dicyclohexyl methane, 5-amino-1,3,3-trimethylcyclohexanemethylamine (isophoronediamine), 1,3-cyclohexanebis(methylamine) (1,3 BAC), and 3,3'-dialkyl-4,4'-diaminodicyclohexyl methanes (such as 3,3'-dimethyl-4,4'-diaminodicyclohexyl methane and 3,3'-diethyl-4,4'-diaminodicyclohexyl methane).

A polyamine material according to the present embodiments comprises or consists of an aromatic polyamine, in which Y in Formula III is or comprises one or more aryl or heteroaryl groups.

In some of any of the embodiments described herein, Y in Formula III is or comprises one or more aryl groups.

When Y comprises two or more aryl or heteroaryl groups, these groups can be linked to one another by a linker as described herein.

When Y comprises two or more aryl or heteroaryl groups, one, two or more of these groups may have one, two or more amine groups (amine-containing substituents).

The aryl or heteroaryl in Y can be substituted or unsubstituted (in addition to its amine-containing substituents). When substituted, the aryl or heteroaryl can be substituted by any of the substituents described herein for an aryl or a heteroaryl and any combination thereof. In exemplary embodiments, each aryl or heteroaryl in Y is substituted by one or more of an alkyl, alkoxy, thioalkoxy, and halo. In exemplary embodiments, an aryl group is substituted by one or more electron donating substituents at positions, with respect to the amine substituents, that render the amine more nucleophilic. Exemplary aromatic polyamine materials according to some of the present embodiments are represented by Formula III above, in which Y is phenyl, and the phenyl is substituted by two or more amine groups (amine-containing substituents).

Exemplary aromatic polyamine materials according to some of the present embodiments are represented by Formula III above, in which Y comprises two or more phenyl groups, linked to one another by a linker as described herein. In some of these embodiments, the linker is an alkylene chain, preferably of 1 to 6, or of 1 to 4, or of 1 or 2, or of 1 carbon atom in length. In exemplary embodiments the linker is methylene.

In some of these embodiments, each of the phenyl groups is substituted by one or more amine groups. Alternatively, all amines (e.g., 2 or more amines) are substituents of one phenyl group. Further alternatively, one phenyl group is not substituted by an amine, and the other groups are each substituted by one or more amines.

Each amine group in the polyamine material can be the same or different, and at least two amine groups are primary and/or secondary amine, as defined herein.

Exemplary aromatic polyamine materials according to some of the present embodiments can be represented by Formula IIIa: 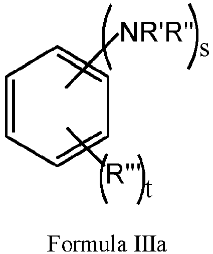 wherein:
s is greater than 1, for example, is 2, 3, or 4;
t is 0 or is 1, 2, 3, or 4;
and R', R'' and R‴ are as defined herein.

In exemplary polyamines of Formula IIIa, s is 2. In some of these embodiments, the amines are at a *meta* position to one another.

In exemplary polyamines of Formula IIIa, t is 3, and each of the additional substituents is independently an alkyl, alkoxy or thioalkoxy.

In exemplary polyamines of IIIa, each amine is a primary amine, such that R' and R'' are each hydrogen.

Exemplary such polyamine materials are marketed by Albermarle as Ethacure 200 (Eth300) and Ethacure 100-LC.

Additional exemplary polyamine materials include, but are not limited to, 2,4- and/or 2,6-diaminotoluene.

Exemplary aromatic polyamine materials according to some of the present embodiments can be represented by Formula IIIb: 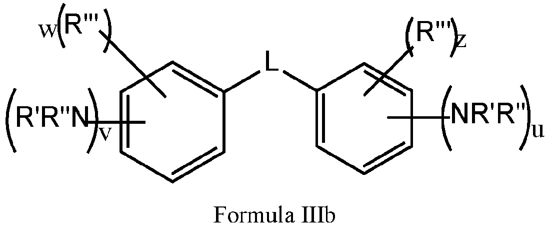 wherein:
u and v are each independently 0, 1, 2, 3, or 4, provided that u+v is 2 or more;
z and w are each independently 0, 1, 2, 3, or 4;
L is a linker as described herein; and
R', R" and R‴ are as defined herein, and R‴ is as defined for R'.

In exemplary polyamines of Formula IIIb, u+v is 2. In some of these embodiments, u and v are each 1. In some of these embodiments, each of the amines is at *a para or ortho* position with respect to L.

In exemplary polyamines of Formula IIIb, z and w are each 0.

In exemplary polyamines, z and w are each 3 and each of the substituents is independently an alkyl (e.g., a lower alkyl) or halo (e.g., chloro).

In exemplary polyamines of Formula IIIb, one or more or all of the amines are each a secondary amine, such that in one or more or all of the amines, R' is H and R'' is other than H. In exemplary embodiments, the R" is an alkyl, preferably a lower alkyl, as described herein, which can be linear or branched. If there are two or more secondary amines, the secondary amines can be the same or different.

In exemplary polyamines of Formula IIIb, one or more or all of the amines are primary amines.

An exemplary polyamine material of Formula IIIb is marketed by Albermarle as Ethacure 420 (Eth420).

An exemplary polyamine material of Formula IIIb is marketed by BrunoBock as MCDEA.

Additional exemplary polyamine materials include 2,4'- and/or 4,4'-diaminodiphenyl

A polyamine material according to the present embodiments can include one polyamine material, e.g., an aromatic polyamine material as described herein in any of the respective embodiments, or a mixture of two or more polyamine materials, as described herein.

An "amine-containing substituent" encompasses an amine substituent per se, as defined herein in any of the respective embodiments, or an alkyl, cycloalkyl, aryl or heteroaryl, or a hydrocarbon chain, as defined herein in any of the respective embodiments, which is substituted by one or more amine substituents.

### The modeling material formulation:

According to the present embodiments, a modeling material formulation comprises one or more isocyanate-containing material(s) and one or more amine-containing material(s).

By "isocyanate-containing material" it is meant any material that comprises one or more isocyanate group, including buiret, isocyanurate, uretdione, and allophonate groups, including mono-functional and multi-functional isocyanate materials, and including monomeric, oligomeric and polymeric such materials.

By "amine-containing materials" it is meant any material that comprises one or more amine groups, including primary, secondary and tertiary amine groups, including mono-functional and multi-functional amine materials, and including monomeric, oligomeric and polymeric such materials.

The one or more isocyanate-containing material(s) comprise one or more polyisocyanate material, as defined and described herein. The one or more amine-containing material(s) comprises one or more aromatic polyamine material(s), as defined and described herein.

According to some of any of the embodiments described herein, the one or more polyisocyanate material(s) feature an average number of isocyanate groups of at least 2.

By "average number of isocyanate groups" it is meant a total number of isocyanate groups of a polyisocyanate material, in case the formulation or sub-formulation comprises one polyisocyanate material, or, in case of two or more polyisocyanate materials, a sum of a number of isocyanate groups in one material x the weight percent of this material relative to the total weight of the polyisocyanate materials and a number of isocyanate groups in another material x the weight percent of this material relative to the total weight of the polyisocyanate materials, and so forth, divided by 100.

According to some embodiments, an average number of isocyanate groups of the polyisocyanate materials ranges from 2 to 4, or from 2 to 3.

The one or more polyisocyanate materials can include any of the polyisocyanate materials described herein, and any combination thereof.

According to some of any of the embodiments described herein, the one or more polyisocyanate material(s) comprise one or more non-aromatic, namely, an aliphatic, alicyclic and/or heteroalicyclic polyisocyanate material, as described herein in any of the respective embodiments.

According to some of any of the embodiments described herein, the one or more non-aromatic polyisocyanate materials feature an average number of isocyanate groups of at least 2, or of from 2 to 4 or from 2 to 3, as described herein.

According to some of any of the embodiments described herein, the polyisocyanate materials comprise at least 50 %, preferably at least 60 %, or at least 70 %, or at least 75 %, or at least 80 %, or at least 85 %, or at least 90 %, or at least 95 %, or 100 %, by weight of non-aromatic, that is, aliphatic, alicyclic and/or heteroalicyclic polyisocyanate material(s), as described herein in any of the respective embodiments and any combination thereof, of the total weight of isocyanate-containing materials in the modeling material formulation, or of the total weight of a formulation or sub-formulation containing isocyanate-containing materials.

According to some of any of the embodiments described herein, the one or more isocyanate-containing materials in the formulation comprise one or more aromatic polyisocyanate material, as described herein in any of the respective embodiments.

According to some of these embodiments, the one or more aromatic polyisocyanate materials feature an average number of isocyanate groups of at least 2, as described and defined herein, and in some embodiments the average number is from 2 to 4, or from 2 to 3.

According to some of any of the embodiments described herein, the polyisocyanate materials comprise no more than 40 %, preferably no more than 30 %, or no more than 20 %, or no more than 10 %, by weight of aromatic polyisocyanate material(s), if such are present, of the total weight of isocyanate-containing materials in the modeling material formulation, or of the total weight of a formulation or sub-formulation containing isocyanate-containing materials.

According to some of any of the embodiments described herein, the one or more isocyanate-containing materials in the formulation further comprises one or more mono-functional isocyanate material(s). The one or more monofunctional isocyanate material(s) can be aromatic, aliphatic, alicyclic or heteroalicyclic.

According to some of any of the embodiments described herein, the isocyanate-containing materials comprise a total weight of no more than 40 %, preferably no more than 30 %, or no more than 20 %, or no more than 10 %, by weight, of aromatic polyisocyanate material(s) and of monofunctional isocyanate material(s), if such are present, of the total weight of isocyanate-containing materials in the modeling material formulation, and/or of the total weight of a formulation or sub-formulation containing isocyanate-containing materials.

A modeling material formulation as described herein, further comprises amine-containing materials, of which at least one is an aromatic polyamine material as described herein in any of the respective embodiments.

According to some of any of the embodiments described herein, the formulation comprises one or more aromatic polyamine material(s).

According to some of any of the embodiments described herein, an average number of amine groups, as defined herein for the polyisocyanate material, in the one or more aromatic polyamine material(s) is at least 2, and in some embodiments, this average number is 2.

According to some of any of the embodiments described herein, a total amount of the one or more aromatic polyamine material(s) is at least 50 %, preferably at least 60 %, or at least 70 %, or at least 80 %, or at least 90 %, and even 100 % by weight of the total weight of the amine-containing materials in the modeling material formulation and/or of the total weight of a formulation or sub-formulation containing amine-containing materials.

According to some of any of the embodiments described herein, a total amount of the one or more aromatic polyamine material(s) ranges from about 60 % to 100 %, or from about 70 % to about 100 %, by weight of the total weight of the amine-containing materials in the modeling material formulation and/or of the total weight of a formulation or sub-formulation containing amine-containing materials.

According to some of any of the embodiments described herein, the amine-containing materials in the modeling material formulation comprise, in addition to the one or more aromatic polyamine material(s), one or more of a non-aromatic polyamine material(s) (e.g., one or more of an aliphatic or alicyclic polyamine material as described herein in any of the respective embodiments) and/or one or more mono-functional amine-containing material(s) (monofunctional amine material).

As explained hereinabove, a reaction of a polyisocyanate material with non-aromatic polyamine materials, particularly with aliphatic polyamine materials, is characterized by a high reaction rate that may not be compatible with the additive manufacturing process requirements. Inclusion of aliphatic polyamine materials should therefore be made while considering that such materials may result in increased reaction rates and as long as the resulting reaction rate still meets the process and system requirements. It is to be noted that increasing the reaction rate may be desirable for certain combinations of polyisocyanate materials and polyamine materials.

In some of any of the embodiments described herein, a total amount of the aliphatic and/or alicyclic polyamine material(s) does not exceed 40 % by weight of the total weight of the amine-containing materials in the modeling material formulation and/or of the total weight of a formulation or sub-formulation containing amine-containing materials.

In some of any of the embodiments described herein, a total amount of the aliphatic and/or alicyclic polyamine material(s) is no more than 40 %, or no more 30 % or no more than 25 %, or no more than 20 %, or even less, by weight of the total weight of the amine-containing materials in the modeling material formulation and/or of the total weight of a formulation or sub-formulation containing amine-containing materials.

In some of any of the embodiments described herein, a total amount of the aliphatic and/or alicyclic polyamine material(s) ranges from 0-40 %, or from 0-30 % or from 0-25 %, or from 0-20 %, or from 0-10 %, or from 0-5 %, by weight of the total weight of the amine-containing materials in the modeling material formulation and/or of the total weight of a formulation or sub-formulation containing amine-containing materials.

In some of any of the embodiments described herein, a total amount of the monofunctional amine material(s) is no more than 40 %, or no more 30 % or no more than 25 %, or no more than 20 %, or even less, by weight of the total weight of the amine-containing materials in the modeling material formulation and/or of the total weight of a formulation or sub-formulation containing amine-containing materials.

In some of any of the embodiments described herein, a total amount of the monofunctional amine material(s) ranges from 0-40 %, or from 0-30 % or from 0-25 %, or from 0-20 %, or from 0-10 %, or from 0-5 %, by weight of the total weight of the amine-containing materials in the modeling material formulation and/or of the total weight of a formulation or sub-formulation containing amine-containing materials.

According to some of any of the embodiments described herein, the modeling material formulation further comprises one or more materials that are reactive towards one or more of the isocyanate-containing materials and/or the amine-containing materials in the modeling material formulation, under the process conditions, namely, can react with one or more of these materials, and/or with a polyurea material formed thereby.

Exemplary such materials include hydroxy-containing and/or thiol-containing materials, which include two or more thiol and/or hydroxy groups, and which can be collectively represented by Formula IV: 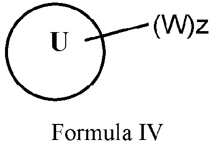 Wherein:
U is a linear or branched hydrocarbon, which can be substituted or unsubstituted, saturated or unsaturated, and optionally interrupted by one or more heteroatoms or groups as described herein;
Z is an integer of at least 2, for example, of from 2 to 6, or from 2 to 4; and
For each (W)z, W can be independently hydroxy or thiol.

When all W groups are thiols, such materials are referred to herein as polythiols.

When all W groups are hydroxy, such compounds are referred to herein as polyols or polyhydroxy materials.

In exemplary embodiments, U is a linear hydrocarbon as described herein, or is an alkylene glycol or a poly(alkylene glycol), as defined herein; z is 2, and the two W moieties are each at a terminus of U. In exemplary such embodiments, both W are thiols or both W are hydroxy. Alternatively, one W is hydroxy and the other thiol.

Exemplary polythiols may have ether linkages (-O-), thioether linkages (-S-), including polysulfide linkages, e.g., -S-S- linkages, and combinations of such linkages, within the U moiety, or as linking the W thiol group to U.

An exemplary such compound is marketed by BrunBock as Thiocure GDMP.

Examples of suitable polythiols include esters of thiol-containing acids formed by reacting a thiol-containing acid of formula HS-R₂-COOH where R₂ is an organic moiety (e.g., a linker as described herein in any of the respective embodiments) with a polyhydroxy compound of the structure R₃-(OH)z where R₃ is an organic moiety (e.g., alkyl, cycloalkyl, aryl, heteroalicyclic, heteroaryl, acyl, each being substituted or unsubstituted as described herein, and z is at least 2, for example, is from 2 to 6. These components may be reacted under suitable conditions to give polythiols having the general structure R₃-(OC(=O)-R₂-SH)z wherein R₂, R₃ and z are as defined above.

Other suitable polythiols include ethylene glycol bis(thioglycolate), ethylene glycol bis(β-mercaptopropionate), trimethylolpropane tris(thioglycolate), trimethylolpropane trisβ-mercaptopropionate), pentaerythritol tetrakis(thioglycolate) and pentaerythritol tetrakis(β-mercaptopropionate), and combinations of any of the foregoing.

Examples of polyhydroxy materials include alkylene glycols, polyalkelene glycol, glycols, triols, tetraols, pentaols, hexaols, and combinations of any of the foregoing.

In some of any of the embodiments described herein, a mol or weight ratio of a polyisocyanate material and of a polyamine material and, if present, a polythiol and/or a polyhydroxy material, in a modeling material formulation, is such that a ratio between an average number of isocyanate groups and an average number of the amine, thiol and hydroxy groups (in total), ranges from about 1.2:1 to about 1:1.2, or from about 1.2:1 to 1:1, or, is about 1.05:1. The average number of isocyanate groups and of amine, thiol and/or hydroxy groups (in total) is determined as described hereinabove.

Thus, for example, if an average number of isocyanate groups of the polyisocyanate materials in the formulation is 3, and an average number of amine groups of the polyamine materials is 2, the relative weight ratio of the polyisocyanate materials and the polyamine materials is preferably such that a mol ratio of the polyisocyanate materials and a mol ratio of the polyamine materials is about 2:3.

If an average number of isocyanate groups of the polyisocyanate materials in the formulation is 2, and an average number of amine groups of the polyamine materials is 2, the relative weight ratio of the polyisocyanate materials and the polyamine materials is preferably such that a mol ratio of the polyisocyanate materials and a mol ratio of the polyamine materials is about 1:1 (e.g., 1.05:1).

If polythiol and/or a polyhydroxy materials, which react with a polyisocyanate to form a polyurethane material, is/are present, an average number of functional thiol and/or hydroxy groups of these material is 2, an average number of amine groups is 2 and an average number of cyanate groups is 3, then the weight ratio of these materials in the modeling material formulation is preferably such that provides a mol ratio 2:3 between the polyisocyanate material and the total amount of the polyamine, polythiol and polyhydroxy materials. The weight and mol ratio between the polyamine and the polythiol and/or polyhydroxy materials can be selected as desired for the hardened polymeric material provided by the formulation.

The weight ratio can be readily calculated based on the molecular weight of the respective materials, and the number of functional groups (isocyanate, and amine, hydroxy and/or thiol) in each material, and can also be derived from information regarding the "equivalent molecular weight" abbreviated as "EMW", or "equivalent weight", as these terms are defined hereinafter, when such are available for respective materials.

According to some of any of the embodiments described herein, the modeling material further comprises an additional material, which is non-reactive towards the isocyanate-containing materials and/or the amine-containing materials in the formulation. By "non-reactive" it is meant that no chemical reaction occurs between this additional material and the isocyanate-containing materials and/or the amine-containing materials and/or a polyurea formed thereby, under the process conditions.

Such a non-reactive material can be added, for example, in order to provide the formulation or sub-formulation containing same with physical and/or rheological properties that meet the requirements of an additive manufacturing process, as described herein.

In some embodiments, the additional non-reactive material is such that provides a formulation or a sub-formulation containing same which features a viscosity as defined herein.

According to some of any of these embodiments, the non-reactive additional material is an aprotic material.

According to some of any of these embodiments, the non-reactive additional material is a curable material.

According to some of any of these embodiments, the non-reactive additional material is an aprotic curable material.

A non-reactive, a defined herein (with respect to the isocyanate-containing, amine-containing and formed polyurea material), additional curable material as described herein is also referred to herein as "reactive diluent".

The curable material can be curable when exposed to the same curing conditions used for forming a polyurea material and/or when exposed to a different curing condition.

In some embodiments, the additional curable material is a photo-curable or photopolymerizable material. In some embodiments, the additional curable material is a UV-curable material.

According to some of any of these embodiments, the additional, non-reactive, curable material is a multi-functional curable material as defined herein, and, in some of these embodiments, it is a multi-functional UV-curable material.

In some of any of the embodiments described herein, the additional, non-reactive, optionally multi-functional, curable material is characterized as featuring a viscosity, at room temperature, of less than 15 centipoises or less than 10 centipoises.

Whenever a viscosity or any other property is described herein, this property is determined according to procedures and/or by measurement devices which are commonly used in the art for determining the respective property. Exemplary procedures and devices are defined hereinafter. Unless otherwise indicated, viscosity values are provided for room temperature and are measured using a Brookfield rheometer.

In some of any of the embodiments described herein, the multi-functional curable material is characterized as featuring a flash point that is higher by at least 5 °C, or at least 10 °C, preferably by at least 20 °C, e.g., by 30 °C or more, than a temperature that is applied to the formulation during an additive manufacturing process.

By "flash point" it is meant the lowest temperature at which a material ignites when exposed to an ignition source (e.g., oxygen). Flash point of a material can be determined by means known in the art, for example, according to ISO TR 29662.

A temperature applied to the formulation during an additive manufacturing process can be the jetting temperature (e.g., the temperature of the dispensing heads, e.g., printing heads and/or nozzles and/or nozzle arrays during 3D inkjet printing); the temperature of the receiving tray onto which layers are dispensed; a temperature of the dispensed layers (which may increase in case of an exothermic reaction between materials in the dispensed formulation(s), and/or due to application of curing energy); and a temperature of the immediate environment of the dispensed layers (e.g., in a chamber at which the process is performed).

In some embodiments, the flash point is higher, as defined herein, than a temperature of the dispensing heads and/or nozzles (e.g., inkjet printing heads and/or nozzles).

In some of these embodiments, a temperature of the dispensing heads and/or nozzles (e.g., inkjet printing heads and/or nozzles) is about 70 °C.

In some of any of the embodiments described herein, the non-reactive, multifunctional curable material is characterized by a flash point of at least 80 °C, and preferably higher, for example, of 85, 90, 95 higher, e.g., of at least 95, at least 100, at least 110, at least 120, °C, or higher.

In some of any of the embodiments described herein, the non-reactive, multifunctional curable material is characterized by a viscosity, at room temperature, of less than 15 centipoises or less than 10 centipoises; and by a flash point of at least 80 °C, as defined herein.

In some of any of the embodiments described herein, the non-reactive, multifunctional curable material comprises two or more polymerizable moieties linked to one another via a hydrocarbon chain, as defined herein.

The hydrocarbon chain can comprise a total of 1-40 atoms. In some embodiments, the hydrocarbon chain is a lower chain, comprising from 1 to 20, or from 2 to 10, or from 2 to 8, or from 2 to 8, carbon atoms, optionally interrupted by 1-4 heteroatoms.

In some embodiments, the hydrocarbon chain consists of carbon atoms.

In some embodiments, the hydrocarbon chain comprises, or consists of, an alkyl, a cycloalkyl, an aryl, an alkaryl, or any combination thereof.

In embodiments where the non-reactive, multifunctional curable material is a tri-functional or tetra-functional curable material, the hydrocarbon can be a branching unit, as defined herein.

In some of any of the embodiments described herein, the non-reactive, multifunctional curable material is a difunctional curable material.

Exemplary non-reactive, difunctional curable materials which are usable in the context of the present embodiments are collectively represented by Formula V: 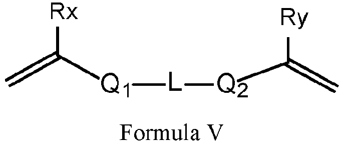 wherein:
Q1 and Q2 are each independently selected from -O- and -O-C(=O)-;
L is a linker, e.g., a hydrocarbon, as defined herein in any of the respective embodiments; and
Rx and Ry are each independently selected from hydrogen, alkyl and cycloalkyl.

When Q1 and Q1 are each O, the difunctional curable material is a divinyl ether.

When Q1 and Q1 are each -O-C(=O)- the difunctional curable material is a di(meth)acrylate (that is a diacrylate or dimethacrylate or acrylate/methacrylate).

When Q1 and Q1 are each -O-C(=O)- and Rx and Ry are each hydrogen, the difunctional material is a diacrylate.

When Q1 and Q1 are each -O-C(=O)- and Rx and Ry are each methyl, the difunctional material is a dimethacrylate.

In some of any of the embodiments described herein, the difunctional curable material is a divinyl ether as depicted in Formula V.

In some of any of the embodiments described herein, the difunctional curable material is a dimethacrylate as depicted in Formula V.

Without being bound by any particular theory, it is assumed that curable materials which are characterized by lower polymerization rate when exposed to curing condition, such as dimethacrylates are preferred.

In some of any of the embodiments defined herein, the hydrocarbon is or comprises a rigid moiety, for example, a cyclic moiety such as a cycloalkyl (an alicyclic moiety) and/or an aryl (e.g., phenyl) or alkaryl (e.g., benzyl).

In some of any of the embodiments described herein, the amount of the non-reactive, multifunctional curable material in a formulation or sub-formulation containing same is no more than 40 weight percents, or no more than 25 weight percents, and can range, for example, from 0 to 40, or from 0 to 30, or from 0 to 25, or from 0 to 20, or from 0 to 15, or from 0 to 10, % by weight, of the total weight of a formulation or sub-formulation containing same.

In some of any of the embodiments described herein, the additional non-reactive material is a non-curable material.

In some of any of the embodiments described herein, the additional non-reactive material is an aprotic non-curable material.

In some embodiments, such a material can act as a solvent, which may be used to adjust the physical and/or rheological properties of a formulation or sub-formulation containing same.

In some embodiments, the solvent is an organic solvent and in some specific embodiments it is an organic polar aprotic solvent.

Preferably, the solvent is selected such that it can be easily removed from the hardened material upon dispensing the layers and during or subsequent to the hardening.

Preferably, the solvent is volatile at the condition (e.g. curing condition and/or post-curing condition) applied to the dispensed layers.

In some embodiments, the additional non-reactive non-curable material, which is also referred to herein as a solvent, is a volatile material featuring a boiling temperature of no more than 200 °C, for example, in a range of from 100 to 200 °C or from 120 to 200 °C.

In some embodiments, the solvent features a low evaporation rate, lower than 1, or lower than 0.5, preferably lower than 0.3.

An evaporation rate, as used herein, refers to n-butyl acetate as the reference material.

The solvent, in some embodiments, may exhibit a viscosity and/or a flash point as described herein for the non-reactive curable additional material.

Exemplary materials that are suitable for use as solvents in the context of these embodiments of the present invention include, but are not limited to, higher acetates, higher ketones, substituted higher amides, higher nitriles, wherein "higher" means of, for example, 4, 5, 6, 7 or more carbon atoms, toluene, and like hydrocarbons with a flash point higher than 80, or higher than 100, or higher than 120,°C.

Exemplary suitable solvents include, but are not limited to, n-butyl acetate, n-pentyl acetate, n-hexyl acetate, n-heptyl acetate, n-butyl propionate, n-pentyl propionate, n-hexyl propionate, n-heptyl propionate, and esters containing branched alkyls. An exemplary solvent is hexyl acetate.

In some of any of the embodiments described herein, the amount of the additional non-curable material in a formulation or sub-formulation containing same is no more than 40 weight percent, or no more than 25 weight percent, and can range, for example, from 0 to 40, or from 0 to 30, or from 0 to 25, or from 0 to 20, or from 0 to 15, or from 0 to 10, % by weight, of the total weight of a formulation or sub-formulation containing same.

In some of any of the embodiments described herein, the total amount of the additional non-reactive materials, both curable and non-materials, in a formulation or sub-formulation containing same is no more than 40 weight percent, or no more than 25 weight percent, and can range, for example, from 0 to 40, or from 0 to 30, or from 0 to 25, or from 0 to 20, or from 0 to 15, or from 0 to 10, % by weight, of the total weight of a formulation or sub-formulation containing same.

In some of any of the embodiments described herein, a modeling material formulation can further comprise one or more additional non-reactive materials, which are added so as to provide the formulation and/or the hardened material formed mechanical and/or physical properties.

Such agents include, for example, surface active agents, stabilizers, antioxidants, fillers, pigments, dispersants, and/or impact modifying agents (toughening agents or toughness modifiers). Such agents are typically included in a formulation or sub-formulation containing same in an amount of from 0.01 to 20 %, by weight, of the total weight of a formulation or sub-formulation containing same, preferably in an amount of 0.01 to 10 %, or of 0.01 to 5 %, or of 0.01 to 1 %, by weight, unless otherwise indicated.

In cases of multi-part formulation, any of the non-reactive agents described herein can be independently included in one or all of the modeling material sub-formulations.

The term "filler" describes an inert material that modifies the properties of a polymeric material and/or adjusts a quality of the end products. The filler may be an inorganic particle, for example calcium carbonate, silica, and clay.

Fillers may be added to the modeling formulation in order to reduce shrinkage during polymerization or during cooling, for example, to reduce the coefficient of thermal expansion, increase strength, increase thermal stability, reduce cost and/or adopt rheological properties. Nanoparticles fillers are typically useful in applications requiring low viscosity such as ink-jet applications.

In some embodiments, a modeling formulation comprises a surface active agent. A surfaceactive agent may be used to reduce the surface tension of the formulation to the value required for jetting or for printing process, which is typically between 10 dyne/cm and 50 dyne/cm, for instance about 30 dyne/cm. An exemplary such agent is a silicone surface additive.

Surface active agents can be used according to any of the respective embodiments as described herein, and as described, for example, in the Examples section that follows.

Suitable stabilizers (stabilizing agents) include, for example, thermal stabilizers, which stabilize the formulation at high temperatures.

In some embodiments, the modeling formulation comprises one or more pigments. In some embodiments, the pigment's concentration is lower than 35%, or lower than 25 % or lower than 15 %, by weight.

The pigment may be a white pigment. The pigment may be an organic pigment or an inorganic pigment, or a metal pigment or a combination thereof.

In some embodiments the modeling formulation further comprises a dye.

In some embodiments, combinations of white pigments and dyes are used to prepare colored cured materials.

The dye may be any of a broad class of solvent soluble dyes. Some non-limiting examples are azo dyes which are yellow, orange, brown and red; anthraquinone and triarylmethane dyes which are green and blue; and azine dye which is black.

In some of any of the embodiments described herein, one or more of the modeling material formulations comprises a toughening agent.

Non-limiting examples of toughening agents include elastomeric materials. Representative examples include, without limitation, natural rubber, butyl rubber, polyisoprene, polybutadiene, polyisobutylene, ethylene-propylene copolymer, styrene-butadiene - styrene triblock rubber, random styrene-butadiene rubber, styrene-isoprene-styrene triblock rubber, styreneethylene/butylene-styrene copolymer, styrene-ethylene/propylene-styrene copolymer, ethylene-propylene- diene terpolymers, ethylene-vinyl acetate and nitrile rubbers. Preferred agents are elastomers such as polybutadienes. Toughening agents such as elastomeric materials can be added to the formulation by incorporating in a modeling material formulation an elastomeric material in a dispersed/dissolved phase.

Other impact modifying agents, such as, for example, carbon fibers, carbon nanotubes, glass fibers, aramid Kevlar, polyparaphenylene benzobisoxazole Zylon, and other polar and nonpolar impact modifiers, are also contemplated.

### Multi-part Modeling Material Formulation:

According to some of any of the embodiments described herein, the modeling material formulation is a multi-part modeling material formulation which comprises at least a first sub-formulation and a second sub-formulation. The modeling material formulation can similarly include a third, fourth, fifth and so forth, sub-formulations.

By "multi-part formulation" it is meant herein that the components of the formulation, as described herein in any of the respective embodiments, are divided between the two or more sub-formulations. A multi-part formulation is dispensed during the additive manufacturing in such a way that allows at least the polyisocyanate and the polyamine materials to contact and react with one another and thus can be considered as providing one type of a polyurea material, at the locations at which the multi-part modeling material formulation is dispensed.

In some of any of the embodiments described herein, the multi-part modeling material formulation comprises one or more sub-formulations that comprises a polyisocyanate material, as described herein, and one or more sub-formulations that comprises a polyamine material, as described herein, in any of the respective embodiments and any combination thereof.

In some of any of the embodiments described herein, a first sub-formulation in the multi-part formulation comprises a polyisocyanate material.

In some of any of the embodiments described herein, a second sub-formulation in the multi-part formulation comprises a polyisocyanate material.

According to some of any of the embodiments of a multi-part formulation, a sub-formulation that comprises a polyisocyanate material does not comprise a polyamine material, and *vice versa,* a sub-formulation that comprises a polyamine material does not comprise a polyisocyanate material.

In some of any of the embodiments described herein, the multi-part formulation comprises at least a first sub-formulation that comprises a polyisocyanate material as described herein in any of the respective embodiments, and optionally any of the other materials that can be included in the modeling material formulation, and in some embodiments, the first sub-formulation does not comprise materials that are reactive towards the an isocyanate-containing material, such as, for example, a polyamine material, a polythiol material and/or a polyhydroxy material.

In some of any of the embodiments described herein, a second sub-formulation comprises a polyamine material as described herein in any of the respective embodiments, and optionally any of the other materials that can be included in the modeling material formulation, and in some embodiments, the second sub-formulation does not comprise a material that are reactive towards the an amine-containing materials, such as, for example, an isocyanate-containing material, and particularly a polyisocyanate material.

In some of any of the embodiments described herein, the multi-part formulation can comprise a third sub-formulation that comprises a polyisocyanate material, as described herein, and a fourth sub-formulation that comprises a polyamine material, as described herein, and so forth, as desired.

In some of any of the embodiments described herein, each sub-formulation features a viscosity that meets the requirements of the additive manufacturing process.

In some of these embodiments, the additive manufacturing is 3D inkjet printing.

In some of these embodiments, each sub-formulation features a viscosity of from 8 to 90 centipoises, at the dispensing temperature (e.g., jetting temperature), and in some embodiments, each sub-formulation features a viscosity of from 8 to 90 centipoises, at a temperature within a range of from 60 to 70 °C (e.g., 68 °C).

In some of any of the embodiments described herein, a sub-formulation that comprises a polyisocyanate and a sub-formulation that comprises a polyamine feature a different surface tension, and in some embodiments, the surface tensions differ from one another by at least 5 dyne/cm or at least 10 dyne/cm, and can be, for example, as described in the Examples section that follows.

In some of any of the embodiments described herein, the multi-part formulation is a twopart formulation that comprises a first and a second sub-formulations, as described herein.

In some of any of the embodiments described herein, an amount of the one or more polyisocyanate material(s) in a sub-formulation containing same (e.g., a first sub-formulation) is at least 60 %, or at least 70 %, or at least 80 %, or more, by weight, of the total weight of the (e.g., first) sub-formulation.

In some of any of the embodiments described herein, an amount of the one or more non-aromatic polyisocyanate material(s) as described herein in any of the respective embodiments in a sub-formulation containing same (e.g., a first sub-formulation) is at least 60 %, or at least 70 %, or at least 80 %, or more, by weight, of the total weight of the (e.g., first) sub-formulation.

In some of any of the embodiments described herein, a (e.g., first) sub-formulation that comprises a non-aromatic polyisocyanate material may further comprise one or more of:
an aromatic polyisocyanate material, optionally in an amount of no more than 40 % by weight of the (e.g., first) sub-formulation;
a monofunctional isocyanate material, in an amount of no more than 40 % by weight of the (e.g., first) sub-formulation;
   and
an additional non-reactive material as described herein in any of the respective embodiments, which can be a curable or non-curable material, optionally in a total amount of no more than 25 % by weight of the total weight of the first sub-formulation.

The presence and amount of a non-reactive material can be selected in accordance with the viscosity of the polyisocyanate material, so as to provide the sub-formulation with a viscosity suitable for the AM process.

In some of any of the embodiments described herein, an amount of the one or more aromatic polyamine material(s) in a sub-formulation containing same (e.g., a second sub-formulation) is at least 60 %, or at least 70 %,, or at least 80 %, or more, by weight, of the total weight of the (e.g., second) sub-formulation.

In some of any of the embodiments described herein, a (e.g., second) sub-formulation that comprises one or more aromatic polyamine material may further comprise one or more of:
A non-aromatic (e.g., aliphatic and/or alicyclic) polyamine material, optionally in an amount of no more than 40 % by weight of the second sub-formulation;
a monofunctional amine material, optionally in an amount of no more than 40 % by weight of the formulation;
an additional non-reactive material as described herein in any of the respective embodiments, which can be curable or non-curable, in a total amount of no more than 40 % by weight of the total weight of the second sub-formulation, wherein preferably a non-curable such material is in an amount of no more than 25 % by weight; and
a thiol-containing material and/or a hydroxy-containing material, as described herein in any of the respective embodiments, optionally in an amount of not more than 25 % by weight of the total weight of the second sub-formulation.

A first sub-formulation as described herein in any of the respective embodiments is also referred to herein as Part A of the formulation.

A second sub-formulation as described herein in any of the respective embodiments is also referred to herein as Part B of the formulation.

In some of any of the embodiments described herein, when a multi-part modeling material formulation is used, or when two or more multi-part modeling material formulations are used, a sub-formulation that comprises a polyisocyanate material (Part A) and a sub-formulation that comprises a polyamine material (Part B) are designed and used such that a weight ratio between the total weight of polyisocyanate materials and the total weight of polyamine, polythiol and polyhydroxy material provides a mol ratio between these material as described hereinabove, whereby the mol ratio is determined according to the average functional groups in each material and/or the EMW of each material, as described hereinabove.

### Properties:

Each of the modeling material formulations described herein, including multi-part modeling material formulations, provides one type of a polyurea material, which is determined at least by the type of polyisocyanate materials and polyamine materials of the formulation, and optionally, if present, by the polythiol and/or polyhydroxy materials.

The properties of the formed type of a polyurea material can thus be selected by selecting the type and amount of these material in a modeling material formulation, including a multi-part modeling material formulation.

According to some of the present invention, a series of modeling material formulations, including a series of multi-part modeling material formulations, can be tailored to provide a polyurea material with desirable properties.

For example, if a more rigid polyurea material is desirable, a formulation featuring higher average number of isocyanate groups and/or amine groups is selected.

If higher toughness (high impact resistance) is desirable, a formulation comprising a polyamine material of, for example, Formulation IIIb is selected, and/or polyamine and/or polyisocyanate materials that feature higher number of flexible (e.g., alkylene of 4 carbon atoms or more) moieties.

Those skilled in the art would know how to design series of modeling material formulations as described herein so as to provide respective series of polyurea materials that feature, for example, a series of toughness values, a series of rigidity/elasticity values, a series of hardness values, etc., based on the instant disclosure and available knowledge regarding the respective materials.

### Kits:

In some of any of the embodiments described herein there is provided a kit comprising the modeling material formulation(s), as described herein in any of the respective embodiments and any combination thereof.

In some embodiments, when the modeling material formulations in a multi-part formulation, each sub-formulation is packaged individually in the kit.

In exemplary embodiments, the formulation(s) and/or sub-formulations are packaged within the kit in a suitable packaging material, preferably, an impermeable material (e.g., water- and gas-impermeable material), and further preferably an opaque material. In some embodiments, the kit further comprises instructions to use the formulations in an additive manufacturing process, preferably a 3D inkjet printing process as described herein. The kit may further comprise instructions to use the formulations in the process in accordance with the method as described herein.

In some embodiments, when a multi-part modeling material formulation is included, the kit further comprises instructions how to use the different parts of the formulation (e.g., Part A and Part B) in the AM process, for example, how to combine the sub-formulations to provide a desired mol ratio and/or weight ratio, in accordance with the respective embodiments as described herein.

### System and Method:

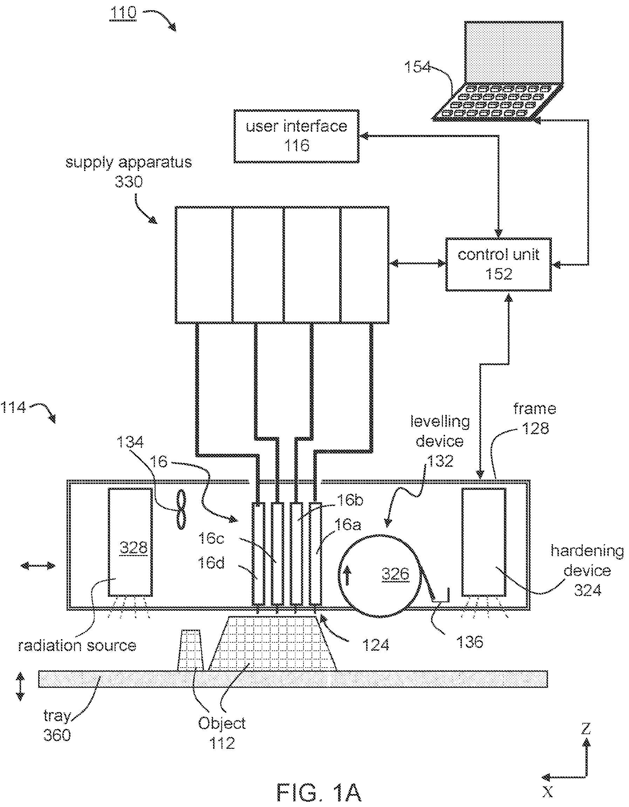

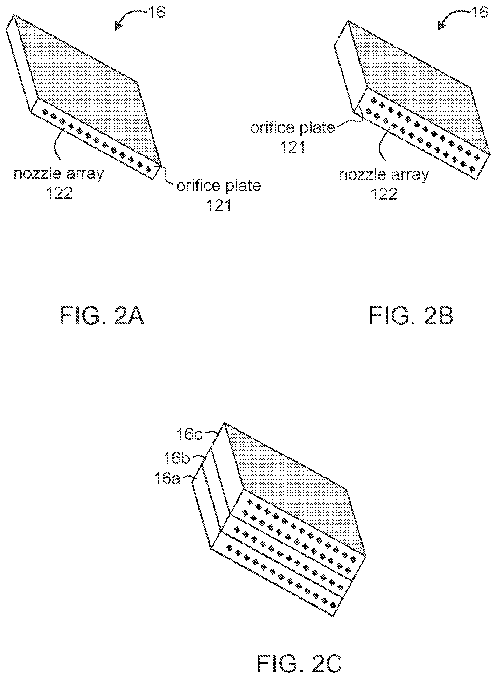

A representative and non-limiting example of a system **110** suitable for AM of an object **112** according to some embodiments of the present invention is illustrated in FIG. 1A. System **110** comprises an additive manufacturing apparatus **114** having a dispensing unit **16** which comprises a plurality of dispensing heads. Each head preferably comprises an array of one or more nozzles **122,** as illustrated in FIGs. 2A-C described below, through which a liquid building material formulation **124** is dispensed.

Preferably, but not obligatorily, apparatus **114** is a three-dimensional printing apparatus, in which case the dispensing heads are printing heads, and the building material formulation is dispensed via inkjet technology. This need not necessarily be the case, since, for some applications, it may not be necessary for the additive manufacturing apparatus to employ three-dimensional printing techniques. Representative examples of additive manufacturing apparatus contemplated according to various exemplary embodiments of the present invention include, without limitation, fused deposition modeling apparatus and fused material formulation deposition apparatus.

Each dispensing head is optionally and preferably fed via a building material formulation reservoir which may optionally include a temperature control unit (*e.g.,* a temperature sensor and/or a heating device), and a material formulation level sensor. Optionally, more than one dispensing head is fed via the same material formulation reservoir, e.g. two dispensing heads may share the same material formulation reservoir to dispense the same material, or two different materials via a single, but internally separated reservoir. To dispense the building material formulation, a voltage signal is applied to the dispensing heads to selectively deposit droplets of material formulation via the dispensing head nozzles, for example, as in piezoelectric inkjet printing technology. The dispensing rate of each head depends on the number of nozzles, the type of nozzles and the applied voltage signal rate (frequency). Such dispensing heads are known to those skilled in the art of solid freeform fabrication. Another example includes thermal inkjet printing heads. In these types of heads, there are heater elements in thermal contact with the building material, for heating the building material to form gas bubbles therein, upon activation of the heater elements by a voltage signal. The gas bubbles generate pressures in the building material, causing droplets of building material to be ejected through the nozzles. Piezoelectric and thermal printing heads are known to those skilled in the art of solid freeform fabrication.

Preferably, but not obligatorily, the overall number of dispensing nozzles or nozzle arrays is selected such that half of the dispensing nozzles are designated to dispense support material formulation and half of the dispensing nozzles are designated to dispense modeling material formulation, i.e. the number of nozzles jetting modeling material formulations is the same as the number of nozzles jetting support material formulation. In the representative example of FIG. 1A, four dispensing heads **16a, 16b, 16c** and **16d** are illustrated. Each of heads **16a, 16b, 16c** and **16d** has a nozzle array. In this Example, heads **16a** and **16b** can be designated for modeling material formulation/s and heads **16c** and **16d** can be designated for support material formulation. Thus, head **16a** can dispense a first modeling material formulation, head **16b** can dispense a second modeling material formulation and heads **16c** and **16d** can both dispense support material formulation. In an alternative embodiment, heads **16c** and **16d,** for example, may be combined in a single head having two nozzle arrays for depositing support material formulation.

Yet it is to be understood that it is not intended to limit the scope of the present invention and that the number of modeling material formulation depositing heads (modeling heads) and the number of support material formulation depositing heads (support heads) may differ. Generally, the number of modeling heads, the number of support heads and the number of nozzles in each respective head or head array are selected such as to provide a predetermined ratio, *a*, between the maximal dispensing rate of the support material formulation and the maximal dispensing rate of modeling material formulation. The value of the predetermined ratio, *a*, is preferably selected to ensure that in each formed layer, the height of modeling material formulation equals the height of support material formulation. Typical values for *a* are from about 0.6 to about 1.5.

For example, for *a =* 1, the overall dispensing rate of support material formulation is generally the same as the overall dispensing rate of the modeling material formulation when all modeling heads and support heads operate.

In a preferred embodiment, there are M modeling heads each having m arrays of p nozzles, and S support heads each having s arrays of q nozzles such that M×m×p = S×s×q. Each of the M×m modeling arrays and S×s support arrays can be manufactured as a separate physical unit, which can be assembled and disassembled from the group of arrays. In this embodiment, each such array optionally and preferably comprises a temperature control unit and a material formulation level sensor of its own, and receives an individually controlled voltage for its operation.

Apparatus **114** can further comprise a solidifying device **324** which can include any device configured to emit light, heat or the like that may cause the deposited material formulation to harden or may further harden an already hardened deposited material. For example, solidifying device **324** can comprise one or more radiation sources, which can be, for example, an ultraviolet or visible or infrared lamp, or other sources of electromagnetic radiation, or electron beam source, depending on the modeling material formulation being used. In some embodiments of the present invention, solidifying device **324** serves for solidifying the modeling material formulation(s) and/or to remove volatile materials dispensed within the modeling material formulation.

The dispensing head and radiation source are preferably mounted in a frame or block **128** which is preferably operative to reciprocally move over a tray **360,** which serves as the working surface. In some embodiments of the present invention the radiation sources are mounted in the block such that they follow in the wake of the dispensing heads to at least partially cure or solidify the material formulations just dispensed by the dispensing heads. Tray **360** is positioned horizontally. According to the common conventions an X-Y-Z Cartesian coordinate system is selected such that the X-Y plane is parallel to tray **360.** Tray **360** is preferably configured to move vertically (along the Z direction), typically downward. In various exemplary embodiments of the invention, apparatus **114** further comprises one or more leveling devices **132,** e.g. a roller **326.** Leveling device **326** serves to straighten, level and/or establish a thickness of the newly formed layer prior to the formation of the successive layer thereon. Leveling device **326** preferably comprises a waste collection device **136** for collecting the excess material formulation generated during leveling. Waste collection device **136** may comprise any mechanism that delivers the material formulation to a waste tank or waste cartridge.

In use, the dispensing heads of unit **16** move in a scanning direction, which is referred to herein as the X direction, and selectively dispense building material formulation in a predetermined configuration in the course of their passage over tray **360.** The building material formulation typically comprises one or more types of support material formulation and one or more types of modeling material formulation. The passage of the dispensing heads of unit **16** is followed by the curing of the modeling material formulation(s), optionally by radiation source **328.** In the reverse passage of the heads, back to their starting point for the layer just deposited, an additional dispensing of building material formulation may be carried out, according to predetermined configuration. In the forward and/or reverse passages of the dispensing heads, the layer thus formed may be straightened by leveling device **326,** which preferably follows the path of the dispensing heads in their forward and/or reverse movement. Once the dispensing heads return to their starting point along the X direction, they may move to another position along an indexing direction, referred to herein as the Y direction, and continue to build the same layer by reciprocal movement along the X direction. Alternately, the dispensing heads may move in the Y direction between forward and reverse movements or after more than one forward-reverse movement. The series of scans performed by the dispensing heads to complete a single layer is referred to herein as a single scan cycle.

Once the layer is completed, tray **360** is lowered in the Z direction to a predetermined Z level, according to the desired thickness of the layer subsequently to be printed. The procedure is repeated to form three-dimensional object **112** in a layerwise manner.

In another embodiment, tray **360** may be displaced in the Z direction between forward and reverse passages of the dispensing head of unit **16,** within the layer. Such Z displacement is carried out in order to cause contact of the leveling device with the surface in one direction and prevent contact in the other direction.

System **110** optionally and preferably comprises a building material formulation supply system **330** which comprises the building material formulation containers or cartridges and supplies a plurality of building material formulations to fabrication apparatus **114.**

A control unit **152** controls fabrication apparatus **114** and optionally and preferably also supply system **330.** Control unit **152** typically includes an electronic circuit configured to perform the controlling operations. Control unit **152** preferably communicates with a data processor **154** which transmits digital data pertaining to fabrication instructions based on computer object data, *e.g.,* a CAD configuration represented on a computer readable medium in a form of a Standard Tessellation Language (STL) format or the like. Typically, control unit **152** controls the voltage applied to each dispensing head or nozzle array and the temperature of the building material formulation in the respective printing head.

Once the manufacturing data is loaded to control unit **152** it can operate without user intervention. In some embodiments, control unit **152** receives additional input from the operator, *e.g.,* using data processor **154** or using a user interface **116** communicating with unit **152.** User interface **116** can be of any type known in the art, such as, but not limited to, a keyboard, a touch screen and the like. For example, control unit **152** can receive, as additional input, one or more building material formulation types and/or attributes, such as, but not limited to, color, characteristic distortion and/or transition temperature, viscosity, electrical property, magnetic property. Other attributes and groups of attributes are also contemplated.

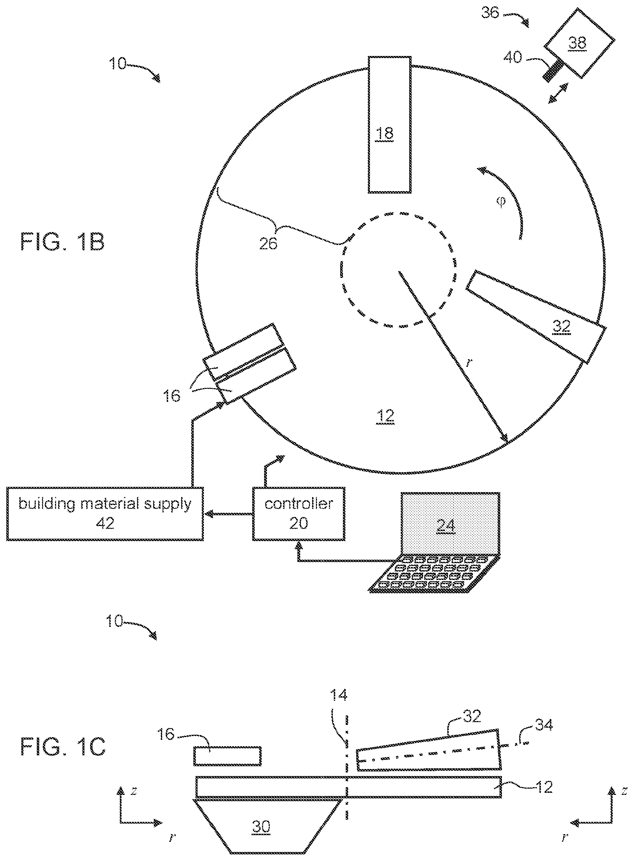

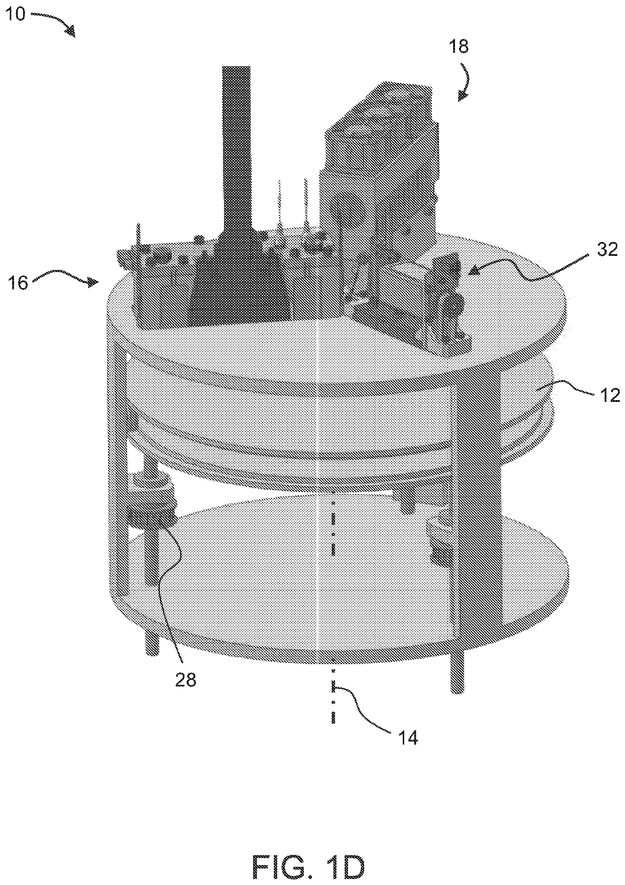

Another representative and non-limiting example of a system **10** suitable for AM of an object according to some embodiments of the present invention is illustrated in FIGs. 1B-D. FIGs. 1B-D illustrate a top view (FIG. 1B), a side view (FIG. 1C) and an isometric view (FIG. 1D) of system **10.**

In the present embodiments, system **10** comprises a building material supply **42,** a tray **12** and a plurality of inkjet printing heads **16,** each having a plurality of separated nozzles. Tray **12** can have a shape of a disk or it can be annular. Non-round shapes are also contemplated, provided they can be rotated about a vertical axis.

Tray **12** and heads **16** are optionally and preferably mounted such as to allow a relative rotary motion between tray **12** and heads **16.** This can be achieved by (i) configuring tray **12** to rotate about a vertical axis **14** relative to heads **16,** (ii) configuring heads **16** to rotate about vertical axis **14** relative to tray **12,** or (iii) configuring both tray **12** and heads **16** to rotate about vertical axis **14** but at different rotation velocities (*e.g*., rotation at opposite direction). While the embodiments below are described with a particular emphasis to configuration (i) wherein the tray is a rotary tray that is configured to rotate about vertical axis **14** relative to heads **16,** it is to be understood that the present application contemplates also configurations (ii) and (iii). Any one of the embodiments described herein can be adjusted to be applicable to any of configurations (ii) and (iii), and one of ordinary skills in the art, provided with the details described herein, would know how to make such adjustment.

In the following description, a direction parallel to tray **12** and pointing outwardly from axis **14** is referred to as the radial direction r, a direction parallel to tray **12** and perpendicular to the radial direction r is referred to herein as the azimuthal direction φ, and a direction perpendicular to tray **12** is referred to herein is the vertical direction z.

The term "radial position," as used herein, refers to a position on or above tray **12** at a specific distance from axis **14.** When the term is used in connection to a printing head, the term refers to a position of the head which is at specific distance from axis **14.** When the term is used in connection to a point on tray **12,** the term corresponds to any point that belongs to a locus of points that is a circle whose radius is the specific distance from axis **14** and whose center is at axis **14.**

The term "azimuthal position," as used herein, refers to a position on or above tray **12** at a specific azimuthal angle relative to a predetermined reference point. Thus, radial position refers to any point that belongs to a locus of points that is a straight line forming the specific azimuthal angle relative to the reference point.

The term "vertical position," as used herein, refers to a position over a plane that intersect the vertical axis **14** at a specific point.

Tray **12** serves as a supporting structure for three-dimensional printing. The working area on which one or objects are printed is typically, but not necessarily, smaller than the total area of tray **12.** In some embodiments of the present invention the working area is annular. The working area is shown at **26.** In some embodiments of the present invention tray **12** rotates continuously in the same direction throughout the formation of object, and in some embodiments of the present invention tray reverses the direction of rotation at least once (*e.g.,* in an oscillatory manner) during the formation of the object. Tray **12** is optionally and preferably removable. Removing tray **12** can be for maintenance of system **10,** or, if desired, for replacing the tray before printing a new object. In some embodiments of the present invention system **10** is provided with one or more different replacement trays (*e.g.,* a kit of replacement trays), wherein two or more trays are designated for different types of objects (*e.g.,* different weights) different operation modes *(e.g.,* different rotation speeds), *etc.* The replacement of tray **12** can be manual or automatic, as desired. When automatic replacement is employed, system **10** comprises a tray replacement device **36** configured for removing tray **12** from its position below heads **16** and replacing it by a replacement tray (not shown). In the representative illustration of FIG. 1B tray replacement device **36** is illustrated as a drive **38** with a movable arm **40** configured to pull tray **12,** but other types of tray replacement devices are also contemplated.

Exemplified embodiments for the printing head **16** are illustrated in FIGs. 2A-2C. These embodiments can be employed for any of the AM systems described above, including, without limitation, system **110** and system **10.**

FIGs. 2A-B illustrate a printing head **16** with one (FIG. 2A) and two (FIG. 2B) nozzle arrays **22.** The nozzles in the array are preferably aligned linearly, along a straight line. In embodiments in which a particular printing head has two or more linear nozzle arrays, the nozzle arrays are optionally and preferably can be parallel to each other.

When a system similar to system **110** is employed, all printing heads **16** are optionally and preferably oriented along the indexing direction with their positions along the scanning direction being offset to one another.

When a system similar to system **10** is employed, all printing heads **16** are optionally and preferably oriented radially (parallel to the radial direction) with their azimuthal positions being offset to one another. Thus, in these embodiments, the nozzle arrays of different printing heads are not parallel to each other but are rather at an angle to each other, which angle being approximately equal to the azimuthal offset between the respective heads. For example, one head can be oriented radially and positioned at azimuthal position φ₁, and another head can be oriented radially and positioned at azimuthal position φ₂. In this example, the azimuthal offset between the two heads is φ₁-φ₂, and the angle between the linear nozzle arrays of the two heads is also φ₁-φ₂.

In some embodiments, two or more printing heads can be assembled to a block of printing heads, in which case the printing heads of the block are typically parallel to each other. A block including several inkjet printing heads **16a, 16b, 16c** is illustrated in FIG. 2C.

In some embodiments, system **10** comprises a support structure **30** positioned below heads **16** such that tray **12** is between support structure **30** and heads **16.** Support structure **30** may serve for preventing or reducing vibrations of tray **12** that may occur while inkjet printing heads **16** operate. In configurations in which printing heads **16** rotate about axis **14,** support structure **30** preferably also rotates such that support structure **30** is always directly below heads **16** (with tray **12** between heads **16** and tray **12**).

Tray **12** and/or printing heads **16** is optionally and preferably configured to move along the vertical direction z, parallel to vertical axis **14** so as to vary the vertical distance between tray **12** and printing heads **16.** In configurations in which the vertical distance is varied by moving tray **12** along the vertical direction, support structure **30** preferably also moves vertically together with tray **12.** In configurations in which the vertical distance is varied by heads **16** along the vertical direction, while maintaining the vertical position of tray **12** fixed, support structure **30** is also maintained at a fixed vertical position.

The vertical motion can be established by a vertical drive **28.** Once a layer is completed, the vertical distance between tray **12** and heads **16** can be increased (*e.g*., tray **12** is lowered relative to heads **16**) by a predetermined vertical step, according to the desired thickness of the layer subsequently to be printed. The procedure is repeated to form a three-dimensional object in a layerwise manner.

The operation of inkjet printing heads **16** and optionally and preferably also of one or more other components of system **10,** *e.g.,* the motion of tray **12,** are controlled by a controller **20.** The controller can have an electronic circuit and a non-volatile memory medium readable by the circuit, wherein the memory medium stores program instructions which, when read by the circuit, cause the circuit to perform control operations as further detailed below.

Controller **20** can also communicate with a host computer **24** which transmits digital data pertaining to fabrication instructions based on computer object data, *e.g.,* in a form of a Standard Tessellation Language (STL) or a StereoLithography Contour (SLC) format, Virtual Reality Modeling Language (VRML), Additive Manufacturing File (AMF) format, Drawing Exchange Format (DXF), Polygon File Format (PLY) or any other format suitable for Computer-Aided Design (CAD). The object data formats are typically structured according to a Cartesian system of coordinates. In these cases, computer **24** preferably executes a procedure for transforming the coordinates of each slice in the computer object data from a Cartesian system of coordinates into a polar system of coordinates. Computer **24** optionally and preferably transmits the fabrication instructions in terms of the transformed system of coordinates. Alternatively, computer **24** can transmit the fabrication instructions in terms of the original system of coordinates as provided by the computer object data, in which case the transformation of coordinates is executed by the circuit of controller **20.**

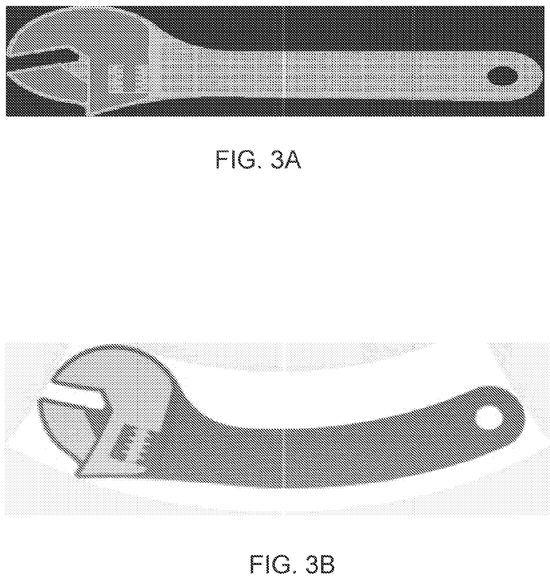

The transformation of coordinates allows three-dimensional printing over a rotating tray. In conventional three-dimensional printing, the printing heads reciprocally move above a stationary tray along straight lines. In such conventional systems, the printing resolution is the same at any point over the tray, provided the dispensing rates of the heads are uniform. Unlike conventional three-dimensional printing, not all the nozzles of the head points cover the same distance over tray **12** during at the same time. The transformation of coordinates is optionally and preferably executed so as to ensure equal amounts of excess material formulation at different radial positions. Representative examples of coordinate transformations according to some embodiments of the present invention are provided in FIGs. 3A-B, showing three slices of an object (each slice corresponds to fabrication instructions of a different layer of the objects), where FIG. 3A illustrates a slice in a Cartesian system of coordinates and FIG. 3B illustrates the same slice following an application of a transformation of coordinates procedure to the respective slice.

Typically, controller **20** controls the voltage applied to the respective component of the system **10** based on the fabrication instructions and based on the stored program instructions as described below.

Generally, controller **20** controls printing heads **16** to dispense, during the rotation of tray **12,** droplets of building material formulation in layers, such as to print a three-dimensional object on tray **12.**

System **10** optionally and preferably comprises one or more radiation sources **18,** which can be, for example, an ultraviolet or visible or infrared lamp, or other sources of electromagnetic radiation, or electron beam source, depending on the modeling material formulation being used. Radiation source can include any type of radiation emitting device, including, without limitation, light emitting diode (LED), digital light processing (DLP) system, resistive lamp and the like. Radiation source **18** serves for curing or solidifying the modeling material formulation. In various exemplary embodiments of the invention the operation of radiation source **18** is controlled by controller **20** which may activate and deactivate radiation source **18** and may optionally also control the amount of radiation generated by radiation source **18.**

In some embodiments of the invention, system **10** further comprises one or more leveling devices **32** which can be manufactured as a roller or a blade. Leveling device **32** serves to straighten the newly formed layer prior to the formation of the successive layer thereon. In some embodiments, leveling device **32** has the shape of a conical roller positioned such that its symmetry axis **34** is tilted relative to the surface of tray **12** and its surface is parallel to the surface of the tray. This embodiment is illustrated in the side view of system **10** (FIG. 1C).

The conical roller can have the shape of a cone or a conical frustum.

The opening angle of the conical roller is preferably selected such that is a constant ratio between the radius of the cone at any location along its axis **34** and the distance between that location and axis **14.** This embodiment allows roller **32** to efficiently level the layers, since while the roller rotates, any point *p* on the surface of the roller has a linear velocity which is proportional (*e.g.,* the same) to the linear velocity of the tray at a point vertically beneath point *p.* In some embodiments, the roller has a shape of a conical frustum having a height *h*, a radius R₁ at its closest distance from axis **14,** and a radius R₂ at its farthest distance from axis **14,** wherein the parameters *h, R*₁ and *R*₂ satisfy the relation *R*₁/*R*₂=(*R-h*)/*h* and wherein *R* is the farthest distance of the roller from axis **14** (for example, R can be the radius of tray **12**).

The operation of leveling device **32** is optionally and preferably controlled by controller **20** which may activate and deactivate leveling device **32** and may optionally also control its position along a vertical direction (parallel to axis **14**) and/or a radial direction (parallel to tray **12** and pointing toward or away from axis **14.**

In some embodiments of the present invention printing heads **16** are configured to reciprocally move relative to tray along the radial direction *r*. These embodiments are useful when the lengths of the nozzle arrays **22** of heads **16** are shorter than the width along the radial direction of the working area **26** on tray **12.** The motion of heads **16** along the radial direction is optionally and preferably controlled by controller **20.**

Some embodiments contemplate the fabrication of an object by dispensing different material formulations and/or different modeling material sub-formulations from different dispensing heads or nozzles. These embodiments provide, *inter alia,* the ability to select material formulations from a given number of material formulations and define desired combinations of the selected material formulations and their properties. According to the present embodiments, the spatial locations of the deposition of each material formulation and/or sub-formulation with the layer is defined, either to effect occupation of different three-dimensional spatial locations by different material formulations, or to effect occupation of substantially the same three-dimensional location or adjacent three-dimensional locations by two or more different material formulations and/or sub-formulations so as to allow post deposition spatial combination of the material formulations and/or sub-formulations within the layer, thereby to form a composite material formulation at the respective location or locations.

Any post deposition combination or mix of modeling material formulations and/or sub-formulations is contemplated. For example, once a certain material formulation is dispensed it may preserve its original properties. However, when it is dispensed simultaneously with another modeling material formulation or other dispensed material formulations which are dispensed at the same or nearby locations, a composite material formulation having a different property or properties to the dispensed material formulations is formed.

The present embodiments thus enable the deposition of a broad range of material formulation combinations, and the fabrication of an object which may consist of multiple different combinations of material formulations, in different parts of the object, according to the properties desired to characterize each part of the object.

Further details on the principles and operations of an AM system suitable for the present embodiments are found in U.S. Published Application No. 20100191360.

### The Method:

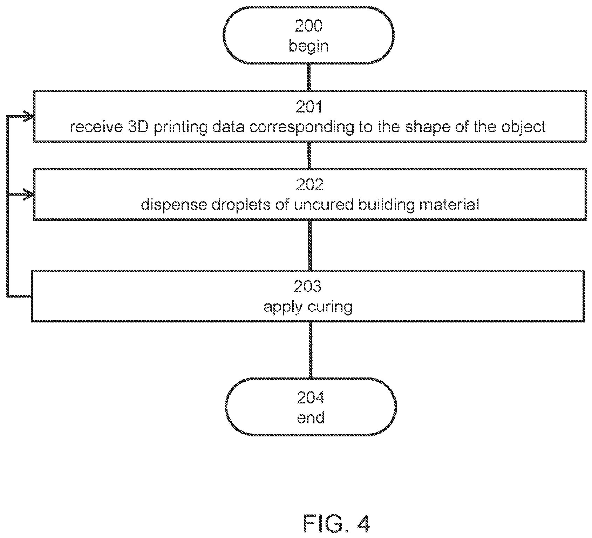

FIG. 4 presents a flowchart describing an exemplary method according to some embodiments of the present invention.

It is to be understood that, unless otherwise defined, the operations described hereinbelow can be executed either contemporaneously or sequentially in many combinations or orders of execution. Specifically, the ordering of the flowchart diagrams is not to be considered as limiting. For example, two or more operations, appearing in the following description or in the flowchart diagrams in a particular order, can be executed in a different order (*e.g.,* a reverse order) or substantially contemporaneously. Additionally, several operations described below are optional and may not be executed.

Computer programs implementing the method of the present embodiments can commonly be distributed to users on a distribution medium such as, but not limited to, a floppy disk, a CD-ROM, a flash memory device and a portable hard drive. From the distribution medium, the computer programs can be copied to a hard disk or a similar intermediate storage medium. The computer programs can be run by loading the computer instructions either from their distribution medium or their intermediate storage medium into the execution memory of the computer, configuring the computer to act in accordance with the method of this invention. All these operations are well-known to those skilled in the art of computer systems.

The computer implemented method of the present embodiments can be embodied in many forms. For example, it can be embodied in on a tangible medium such as a computer for performing the method operations. It can be embodied on a computer readable medium, comprising computer readable instructions for carrying out the method operations. In can also be embodied in electronic device having digital computer capabilities arranged to run the computer program on the tangible medium or execute the instruction on a computer readable medium.

The method begins at **200** and optionally and preferably continues to **201** at which computer object data (*e.g.,* 3D printing data) corresponding to the shape of the object are received. The data can be received, for example, from a host computer which transmits digital data pertaining to fabrication instructions based on computer object data, *e.g.,* in a form of STL, SLC format, VRML, AMF format, DXF, PLY or any other format suitable for CAD.

The method continues to **202** at which droplets of the uncured building material as described herein (e.g., one or more modeling material formulations, each optionally comprising two or more sub-formulations) as described herein and optionally a support material formulation) are dispensed in layers, on a receiving medium, optionally and preferably using an AM system, such as, but not limited to, system **110** or system **10,** according to the computer object data (e.g., printing data), and as described herein. In some embodiments, the AM system is a 3D inkjet printing system, e.g., as described herein. In some of any of the embodiments described herein the dispensing **202** is by at least two different multi-nozzle inkjet printing heads and/or by at least two different nozzle arrays. The receiving medium can be a tray of an AM system (e.g., tray **360** or **12**) as described herein or a previously deposited layer.

In some embodiments of the present invention, the dispensing **202** is effected under ambient environment.

Optionally, before being dispensed, the uncured building material, or a part thereof (e.g., one or more formulations of the building material), is heated, prior to being dispensed. These embodiments are particularly useful for uncured building material formulations having relatively high viscosity at the operation temperature of the working chamber of a 3D inkjet printing system. The heating of the formulation(s) is preferably to a temperature that allows jetting the respective formulation through a nozzle of a printing head of a 3D inkjet printing system. In some embodiments of the present invention, the heating is to a temperature at which the respective formulation exhibits a viscosity as described herein in any of the respective embodiments.

The heating can be executed before loading the respective formulation into the printing head of the AM (e.g., 3D inkjet printing) system, or while the formulation is in the printing head or while the composition passes through the nozzle of the printing head.

In some embodiments, the heating is executed before loading of the respective formulation into the dispensing (*e.g.,* inkjet printing) head, so as to avoid clogging of the dispensing (*e.g.,* inkjet printing) head by the formulation in case its viscosity is too high.

In some embodiments, the heating is executed by heating the dispensing (*e.g.,* inkjet printing) heads, at least while passing the modeling material formulation(s) through the nozzle of the dispensing (*e.g.,* inkjet printing) head.

Further optionally, before being dispensed, the uncured building material, or a part thereof (e.g., one or more formulations of the building material), is circulated within the dispensing (e.g., inkjet printing) head, prior to being dispensed.

The modeling material formulation(s) can be contained in a particular container or cartridge of a solid freeform fabrication apparatus or a combination of modeling material formulations deposited from different containers of the apparatus.

In some embodiments, at least one, or at least a few (e.g., at least 10, at least 20, at least 30 at least 40, at least 50, at least 60, at least 80, or more), or all, of the layers is/are formed by dispensing droplets, as in **202,** of a single modeling material formulation, as described herein in any of the respective embodiments.

In some embodiments, at least one, or at least a few (e.g., at least 10, at least 20, at least 30 at least 40, at least 50, at least 60, at least 80, or more), or all, of the layers is/are formed by dispensing droplets, as in **202,** of two or more modeling material sub-formulations, as described herein in any of the respective embodiments, each sub-formulation from a different dispensing (*e.g.,* inkjet printing) head or a different array of nozzles as described herein.

In some embodiments, at least one, or at least a few (e.g., at least 10, at least 20, at least 30 at least 40, at least 50, at least 60, at least 80, or more), or all, of the layers is/are formed by dispensing droplets, as in **202,** of two or more modeling material formulations, while one or more, or each, of these modeling material formulation may comprise two or more sub-formulations, as described herein in any of the respective embodiments, and each formulation and/or sub-formulation is dispensed from a different dispensing (*e.g*., inkjet printing) head or a different array of nozzles as described herein.

In some of any of the embodiments described herein, at least one modeling material formulation comprises two or more modeling material sub-formulations as described herein, and in some of these embodiments, the two or more sub-formulations are dispensed in a voxelated manner, wherein voxels of one of said modeling material sub-formulations (e.g., Part A) are interlaced with voxels of at least one another modeling material sub-formulation (e.g., Part B).

In some of these embodiments, the two or more modeling material formulations are dispensed in a voxelated manner, wherein voxels of one of said modeling material formulations are interlaced with voxels of at least one another modeling material formulation.

Some embodiments thus provide a method of layerwise fabrication of a three-dimensional object, in which for each of at least a few (*e.g.,* at least two or at least three or at least 10 or at least 20 or at least 40 or at least 80) of the layers or all the layers, two or more modeling formulations are dispensed, optionally and preferably using system **10** or system **110.** Each modeling formulation is preferably dispensed by jetting it out of a plurality of nozzles of a printing head (*e.g*., head **16**). The dispensing is in a voxelated manner, wherein voxels of one of said modeling material formulations are interlaced with voxels of at least one another modeling material formulation, according to a predetermined voxel ratio.

Such a combination of two modeling material formulations at a predetermined voxel ratio is referred to as digital material (DM).

In some of any of the embodiments described herein, at least one modeling material formulation comprises two or more modeling material sub-formulations as described herein, and is some of these embodiments, the two or more sub-formulations are dispensed in a voxelated manner, wherein voxels of one of said modeling material sub-formulations are interlaced with voxels of at least one another modeling material sub-formulation.

In some embodiments of the present invention a "Drop on Drop" printing protocol is employed. These embodiments are schematically illustrated in FIGs. 5A and 5B. A bitmap suitable for the deposition of the first modeling material sub-formulation (Part A) is illustrated in FIG. 5A and a bitmap suitable for the deposition of the second modeling material sub-formulation (Part B) is illustrated in FIG. 5B. White boxes represent vacant locations, dotted boxes represent droplets of the first modeling material sub-formulation and wavy boxes represent droplets of the second modeling material sub-formulation. The printing data in these embodiments are such that for each layer, both modeling material sub-formulations are deposited at the same location, but at different times, during movement of the printing head. For example, each droplet of a first modeling material sub-formulation can be jetted on top of a droplet of a second modeling material sub-formulation, or *vice versa.*

The drop on drop printing protocol allows the two types of drops to combine and mix before the solidification of deposited material.

In some embodiments of the present invention a "side by side" printing protocol is employed. These embodiments are schematically illustrated in FIGs. 6A and 6B. A bitmap suitable for the deposition of the first modeling material sub-formulation (Part A) is illustrated in FIG. 6A and a bitmap suitable for the deposition of the second modeling material sub-formulation (Part B) is illustrated in FIG. 6B. The white, dotted and wavy boxes represent vacant locations, droplets of the first modeling material sub-formulation and droplets of the second modeling material sub-formulation, respectively. The printing data in these embodiments is such that for each layer, each drop of a first modeling material sub-formulation is jetted adjacent to a drop of a second modeling material sub-formulation, or *vice versa.* Due to drop spreading, the adjacent drops tend to at least partially overlap. As a result, the two drops diffuse toward each other, mix and react after deposition.

In the schematic illustrations shown in FIGs. 5A-6B, chessboard bitmaps are illustrated, but this need not necessarily be the case, since, for some applications, other bitmap patterns can be employed.

In some embodiments, the two sub-formulations are dispensed (e.g., jetted) in drops so as to achieve a weight ratio between the sub-formulations as described herein in any of the respective embodiments.

Preferably, but not necessarily, the two sub-formulations are dispensed (e.g., jetted) in drops at the same weight and/or rate. These embodiments are particularly useful when the desired weight ratio between the first and second sub-formulations is 1:1. For other desired weight ratios, the two sub-formulations are preferably jetted in drops of different weights and/or size and/or number, wherein the ratio of the weights corresponds to the desired ratio.

In some of the embodiments described herein, where modeling material formulations and sub-formulations are dispensed via an inkjet system (jetted), and the modeling material formulation comprises a first and second sub-formulations, as described herein (e.g., Part A and Part B), the drops are dispensed such that the mol and/or weight ratio between the polyisocyanate materials and the polyamine and optionally the polythiol and/or polyhydroxy materials, as described herein, are preferably adjusted so that one drop of Part A and one drop of Part B may form a polyurea material according to the present invention, at the targeted location.

For instance, in case drops of Part A and drops of Part B are jetted with the same weight (e.g., 90 ng) and Part A and Part B are prepared so that their respective Equivalent Molecular Weights "EMW", as defined herein, are similar or close (e.g., Part A comprises 100 weight percent of a polyisocyanate material having an EMW of 180 grams/mol; and Part B comprises 100 weight percent of a polyamine material having an EMW of 180 grams/mol or comprises 50 weight percent of a polyamine material having an EMW of 90 grams/mol and 50 weight percent of a non-reactive material as described herein, such as an aprotic solvent), then a polyurea material according to the invention may be formed by jetting one drop of Part A per drop of Part B.

In some other embodiments, drops of Part A and drops of Part B are jetted with the same weight (e.g., 90 ng) but Part A and Part B have Equivalent Molecular Weights that are not similar or close. In such embodiments, a polyurea material according may be formed by jetting, n_{A} drops of Part A per n_{B} drops of Part B, where n_{A} and n_{B} are integer numbers that are selected such that the ratio n_{A}/n_{B} equals or approximately equals the ratio between the EMW of Part A and the EMW of part B. As a representative example, suppose that Part A comprises 100 weight percent of a polyisocyanate material having an EMW of 180 grams/mol, and Part B comprises 100 weight percents of a polyamine material having an EMW of 90 grams/mol. In this case the ratio between the EMW of Part A and the EMW of part B is 180/90=2, and n_{A} and n_{B} can be selected such that n_{A}/n_{B}=2. For example, n_{A} can be set to 2 and n_{B} can be set to 1, in which case a polyurea material may be formed by jetting two drops of Part A per one drop of Part B.

In some other embodiments, the weights of the jetted drops of Part A and the jetted drops of Part B differ. In these embodiments, the weight w_{A} of each drop of Part A and the weight w_{B} of each drop of Part B are preferably selected such that the ratio w_{A}/w_{B} equals or approximately equals the ratio between the EMW of Part A and the EMW of part B. As a representative example, suppose that Part A comprises 100 wt% of a polyisocyanate having an EMW of 180 g/mol, and Part B comprises 100 wt% of polyamine having an EMW of 90 g/mol). In this case the ratio between the EMW of Part A and the EMW of part B is 180/90=2, and w_{A} and w_{B} can be selected such that w_{A}/w_{B}=2. For example, w_{A} can be set to 180 ng and w_{B} can be set to 90 ng, so that a polyurea material according to the present embodiments may be formed by jetting one drop of Part A per drop of Part B.

Other kind of jetting protocols are also contemplated and would be clear to the ordinarily skilled artisan.

Once the uncured building material is dispensed on the receiving medium according to the computer object data (e.g., printing data), the method optionally and preferably continues to 203 at which a curing condition is applied to the deposited layers, e.g., by means of a radiation source as described herein. Preferably, the radiation is applied to each individual layer following the deposition of the layer and prior to the deposition of the previous layer.

In some embodiments, applying a curing energy is effected under a generally dry and inert environment, as described herein.

In some of any of the embodiments of the present invention, once a layer is dispensed as described herein, or once all the layers are dispensed, exposure to a curing condition as described herein is effected, in **203.**

In some embodiments, the curing condition is or comprises application of heat energy. Alternatively, the curing condition comprises merely the contact effected between the dispensed modeling material formulations and/or sub-formulations, such that no radiation or any other external condition is applied to the dispensed layers.

In some embodiments, the heat energy is applied for removing a solvent (if such is included in one or more formulations and/or sub-formulations) from the layer.

The infrared radiation can have either a broad or a narrow wavelength spectrum, in any of the near, short, mid, long or far infrared ranges, and is typically generated by one or more ceramic and/or halogen lamps. While the infrared radiation dose that is delivered to the layer depends on the amount of solvent in the formulation, and also on the conditions within the AM fabrication chamber, the infrared radiation preferably scans the layer at least once, and in some embodiments a plurality of times, before dispensing a subsequent layer.

From operation **202** or operation **203** (when executed) the method optionally and preferably loops back to **201** to receive data for another slice. When the data for the next slice is already stored within the controller, the method can loop back to **202** for form the next layer. Once an object formed of a plurality of layers is fabricated, the method ends at **204.**

In some embodiments, where the building material comprises also support material formulation(s), the method proceeds to removing the hardened support material. This can be performed by mechanical and/or chemical means, as would be recognized by any person skilled in the art.

In some embodiments, the method is executed using an exemplary system as described herein in any of the respective embodiments and any combination thereof.

In some of any of the embodiments described herein, the method further comprises exposing the hardened modeling material, either before or after removal of a support material, if such has been included in the building material, to a post-treatment (or post-curing) condition. The post-treatment condition is typically aimed at further hardening the cured modeling material. In some embodiments, the post-treatment hardens a partially-cured material to thereby obtain a completely cured material.

In some embodiments, the post-treatment is effected by exposure to heat or radiation, as described in any of the respective embodiments herein. In some embodiments, when the condition is heat (thermal post-treatment), the post-treatment can be effected for a time period that ranges from a few minutes (e.g., 10 minutes) to a few hours (e.g., 1-24 hours).

In some embodiments, the thermal post-treatment comprises exposing the object to heat of at least 100 °C for at least one hour.

### The Object:

Embodiments of the present invention provide three-dimensional objects comprising in at least a portion thereof a polyurea material, as defined herein.

According to some embodiments, the three-dimensional objects are prepared by an additive manufacturing utilizing a modeling material formulation which comprises two polyurea precursors, as described herein in any of the respective embodiments.

According to some embodiments, the three-dimensional objects are prepared by a method as described herein in any of the respective embodiments.

According to some embodiments, the three-dimensional object comprises, in at least a portion thereof, a polyurea material, as described herein in any of the respective embodiments.

The three-dimensional object can comprise one or more polyurea materials, in the same or different parts thereof. The polyurea materials can differ from one another, for example, by the type and amount of the polyisocyanate material(s) and/or the polyamine materials(s), and hence can differ from one another by one or more properties that derive from the selected polyurea precursors, for example, by one or more of Izod Impact resistance, Shore A hardness, Shore D hardness, elongation at break, heat deflection temperature (HDT), Tensile strength, glass transition temperature (Tg), as these terms are defined herein.

It is expected that during the life of a patent maturing from this application many relevant printing heads will be developed and the scope of the term printing head or printhead is intended to include all such new technologies *a priori.*

It is expected that during the life of a patent maturing from this application many relevant polyamine materials and/or polyisocyanate materials will be developed and the scope of the terms "polyamine material", and "polyisocyanate material" is intended to include all such new technologies *a priori.*

As used herein the term "about" refers to ± 10 % or ± 5 %.

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration." Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments." Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

Herein throughout, the phrase "linking moiety" or "linking group" or "linker" describes a group that connects two or more moieties or groups in a compound. A linking moiety is typically derived from a bi- or tri-functional compound, and can be regarded as a bi- or tri-radical moiety, which is connected to two or three other moieties, via two or three atoms thereof, respectively.

Exemplary linking moieties include a hydrocarbon moiety or chain, optionally interrupted by one or more heteroatoms, as defined herein, and/or any of the chemical groups listed below, when defined as linking groups.

When a chemical group is referred to herein as "end group" it is to be interpreted as a substituent, which is connected to another group via one atom thereof.

Herein throughout, the term "hydrocarbon" collectively describes a chemical group composed mainly of carbon and hydrogen atoms. A hydrocarbon can be comprised of alkyl, alkene, alkyne, aryl, and/or cycloalkyl, each can be substituted or unsubstituted, and can be interrupted by one or more heteroatoms. The number of carbon atoms can range from 2 to 30, and is preferably lower, e.g., from 1 to 10, or from 1 to 6, or from 1 to 4. A hydrocarbon can be a linking group or an end group.

As used herein, the term "amine" describes both a -NR'R" group and a -NR'- group, wherein R' and R" are each independently hydrogen, alkyl, cycloalkyl, aryl, as these terms are defined hereinbelow.

The amine group can therefore be a primary amine, where both R' and R" are hydrogen, a secondary amine, where R' is hydrogen and R" is alkyl, cycloalkyl or aryl, or a tertiary amine, where each of R' and R" is independently alkyl, cycloalkyl or aryl.

Alternatively, R' and R" can each independently be hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, carbonyl, C-carboxylate, O-carboxylate, N-thiocarbamate, O-thiocarbamate, urea, thiourea, N-carbamate, O-carbamate, C-amide, N-amide, guanyl, guanidine and hydrazine.

The term "amine" is used herein to describe a -NR'R" group in cases where the amine is an end group, as defined hereinunder, and is used herein to describe a -NR'- group in cases where the amine is a linking group or is or part of a linking moiety.

The term "alkyl" describes a saturated aliphatic hydrocarbon including straight chain and branched chain groups. Preferably, the alkyl group has 1 to 30, or 1 to 20 carbon atoms. Whenever a numerical range; *e.g.,* "1-20", is stated herein, it implies that the group, in this case the alkyl group, may contain 1 carbon atom, 2 carbon atoms, 3 carbon atoms, etc., up to and including 20 carbon atoms. The alkyl group may be substituted or unsubstituted. Substituted alkyl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine.

The alkyl group can be an end group, as this phrase is defined hereinabove, wherein it is attached to a single adjacent atom, or a linking group, as this phrase is defined hereinabove, which connects two or more moieties via at least two carbons in its chain. When the alkyl is a linking group, it is also referred to herein as "alkylene" or "alkylene chain".

Alkene and Alkyne, as used herein, are an alkyl, as defined herein, which contains one or more double bond or triple bond, respectively.

The term "cycloalkyl" describes an all-carbon monocyclic ring or fused rings (*i.e.,* rings which share an adjacent pair of carbon atoms) group where one or more of the rings does not have a completely conjugated pi-electron system. Examples include, without limitation, cyclohexane, adamantine, norbornyl, isobornyl, and the like. The cycloalkyl group may be substituted or unsubstituted. Substituted cycloalkyl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine. The cycloalkyl group can be an end group, as this phrase is defined hereinabove, wherein it is attached to a single adjacent atom, or a linking group, as this phrase is defined hereinabove, connecting two or more moieties at two or more positions thereof.

The term "heteroalicyclic" describes a monocyclic or fused ring group having in the ring(s) one or more atoms such as nitrogen, oxygen and sulfur. The rings may also have one or more double bonds. However, the rings do not have a completely conjugated pi-electron system. Representative examples are piperidine, piperazine, tetrahydrofurane, tetrahydropyrane, morpholino, oxalidine, and the like.

The heteroalicyclic may be substituted or unsubstituted. Substituted heteroalicyclic may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, O-carbamate, N-carbamate, C-amide, N-amide, guanyl, guanidine and hydrazine. The heteroalicyclic group can be an end group, as this phrase is defined hereinabove, where it is attached to a single adjacent atom, or a linking group, as this phrase is defined hereinabove, connecting two or more moieties at two or more positions thereof.

The term "aryl" describes an all-carbon monocyclic or fused-ring polycyclic (*i.e.,* rings which share adjacent pairs of carbon atoms) groups having a completely conjugated pi-electron system. The aryl group may be substituted or unsubstituted. Substituted aryl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, N-carbamate, O-carbamate, C-amide, N-amide, guanyl, guanidine and hydrazine. The aryl group can be an end group, as this term is defined hereinabove, wherein it is attached to a single adjacent atom, or a linking group, as this term is defined hereinabove, connecting two or more moieties at two or more positions thereof

The term "heteroaryl" describes a monocyclic or fused ring (*i.e.,* rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furan, thiophene, imidazole, oxazole, thiazole, pyrazole, pyridine, pyrimidine, quinoline, isoquinoline and purine. The heteroaryl group may be substituted or unsubstituted. Substituted heteroaryl may have one or more substituents, whereby each substituent group can independently be, for example, hydroxyalkyl, trihaloalkyl, cycloalkyl, alkenyl, alkynyl, aryl, heteroaryl, heteroalicyclic, amine, halide, sulfonate, sulfoxide, phosphonate, hydroxy, alkoxy, aryloxy, thiohydroxy, thioalkoxy, thioaryloxy, cyano, nitro, azo, sulfonamide, C-carboxylate, O-carboxylate, N-thiocarbamate, O-thiocarbamate, urea, thiourea, O-carbamate, N-carbamate, C-amide, N-amide, guanyl, guanidine and hydrazine. The heteroaryl group can be an end group, as this phrase is defined hereinabove, where it is attached to a single adjacent atom, or a linking group, as this phrase is defined hereinabove, connecting two or more moieties at two or more positions thereof. Representative examples are pyridine, pyrrole, oxazole, indole, purine and the like.

The term "halide" and "halo" describes fluorine, chlorine, bromine or iodine.

The term "haloalkyl" describes an alkyl group as defined above, further substituted by one or more halide.

The term "sulfate" describes a -O-S(=O)₂-OR' end group, as this term is defined hereinabove, or an -O-S(=O)₂-O- linking group, as these phrases are defined hereinabove, where R' is as defined hereinabove.

The term "thiosulfate" describes a -O-S(=S)(=O)-OR' end group or a -O-S(=S)(=O)-O-linking group, as these phrases are defined hereinabove, where R' is as defined hereinabove.

The term "sulfite" describes an -O-S(=O)-O-R' end group or a -O-S(=O)-O- group linking group, as these phrases are defined hereinabove, where R' is as defined hereinabove.

The term "thiosulfite" describes a -O-S(=S)-O-R' end group or an -O-S(=S)-O- group linking group, as these phrases are defined hereinabove, where R' is as defined hereinabove.

The term "sulfinate" describes a -S(=O)-OR' end group or an -S(=O)-O- group linking group, as these phrases are defined hereinabove, where R' is as defined hereinabove.

The term "sulfoxide" or "sulfinyl" describes a -S(=O)R' end group or an -S(=O)- linking group, as these phrases are defined hereinabove, where R' is as defined hereinabove.

The term "sulfonate" describes a -S(=O)₂-R' end group or an -S(=O)₂- linking group, as these phrases are defined hereinabove, where R' is as defined herein.

The term "S-sulfonamide" describes a -S(=O)₂-NR'R" end group or a -S(=O)₂-NR'-linking group, as these phrases are defined hereinabove, with R' and R" as defined herein.

The term "N-sulfonamide" describes an R'S(=O)₂-NR"- end group or a -S(=O)₂-NR'-linking group, as these phrases are defined hereinabove, where R' and R'' are as defined herein.

The term "disulfide" refers to a-S-SR' end group or a-S-S- linking group, as these phrases are defined hereinabove, where R' is as defined herein.

The term "phosphonate" describes a -P(=O)(OR')(OR") end group or a -P(=O)(OR')(O)-linking group, as these phrases are defined hereinabove, with R' and R" as defined herein.

The term "thiophosphonate" describes a -P(=S)(OR')(OR") end group or a -P(=S)(OR')(O)- linking group, as these phrases are defined hereinabove, with R' and R" as defined herein.

The term "phosphinyl" describes a -PR'R" end group or a -PR'- linking group, as these phrases are defined hereinabove, with R' and R" as defined hereinabove.

The term "phosphine oxide" describes a -P(=O)(R')(R") end group or a -P(=O)(R')- linking group, as these phrases are defined hereinabove, with R' and R" as defined herein.

The term "phosphine sulfide" describes a -P(=S)(R')(R") end group or a -P(=S)(R')- linking group, as these phrases are defined hereinabove, with R' and R" as defined herein.

The term "phosphite" describes an -O-PR'(=O)(OR") end group or an -O-PH(=O)(O)-linking group, as these phrases are defined hereinabove, with R' and R" as defined herein.

The term "carbonyl" or "carbonate" as used herein, describes a -C(=O)-R' end group or a - C(=O)- linking group, as these phrases are defined hereinabove, with R' as defined herein.

The term "thiocarbonyl" as used herein, describes a -C(=S)-R' end group or a -C(=S)-linking group, as these phrases are defined hereinabove, with R' as defined herein.

The term "oxo" as used herein, describes a (=O) group, wherein an oxygen atom is linked by a double bond to the atom (e.g., carbon atom) at the indicated position.

The term "thiooxo" as used herein, describes a (=S) group, wherein a sulfur atom is linked by a double bond to the atom (e.g., carbon atom) at the indicated position.

The term "oxime" describes a =N-OH end group or a =N-O- linking group, as these phrases are defined hereinabove.

The term "hydroxyl" describes a -OH group.

The term "alkoxy" describes both an -O-alkyl and an -O-cycloalkyl group, as defined herein.

The term "aryloxy" describes both an -O-aryl and an -O-heteroaryl group, as defined herein.

The term "thiohydroxy" describes a -SH group.

The term "thioalkoxy" describes both a -S-alkyl group, and a -S-cycloalkyl group, as defined herein.

The term "thioaryloxy" describes both a -S-aryl and a -S-heteroaryl group, as defined herein.

The "hydroxyalkyl" is also referred to herein as "alcohol", and describes an alkyl, as defined herein, substituted by a hydroxy group.

The term "cyano" describes a -C=N group.

The term "isocyanate" describes an -N=C=O group.

The term "isothiocyanate" describes an -N=C=S group.

The term "nitro" describes an -NO₂ group.

The term "acyl halide" describes a -(C=O)Rʺʺ group wherein Rʺʺ is halide, as defined hereinabove.

The term "azo" or "diazo" describes an -N=NR' end group or an -N=N- linking group, as these phrases are defined hereinabove, with R' as defined hereinabove.

The term "peroxo" describes an -O-OR' end group or an -O-O- linking group, as these phrases are defined hereinabove, with R' as defined hereinabove.

The term "carboxylate" as used herein encompasses C-carboxylate and O-carboxylate.

The term "C-carboxylate" describes a -C(=O)-OR' end group or a -C(=O)-O- linking group, as these phrases are defined hereinabove, where R' is as defined herein.

The term "O-carboxylate" describes a -OC(=O)R' end group or a -OC(=O)- linking group, as these phrases are defined hereinabove, where R' is as defined herein.

A carboxylate can be linear or cyclic. When cyclic, R' and the carbon atom are linked together to form a ring, in C-carboxylate, and this group is also referred to as lactone. Alternatively, R' and O are linked together to form a ring in O-carboxylate. Cyclic carboxylates can function as a linking group, for example, when an atom in the formed ring is linked to another group.

The term "thiocarboxylate" as used herein encompasses C-thiocarboxylate and O-thiocarboxylate.

The term "C-thiocarboxylate" describes a -C(=S)-OR' end group or a -C(=S)-O- linking group, as these phrases are defined hereinabove, where R' is as defined herein.

The term "O-thiocarboxylate" describes a -OC(=S)R' end group or a -OC(=S)- linking group, as these phrases are defined hereinabove, where R' is as defined herein.

A thiocarboxylate can be linear or cyclic. When cyclic, R' and the carbon atom are linked together to form a ring, in C-thiocarboxylate, and this group is also referred to as thiolactone. Alternatively, R' and O are linked together to form a ring in O-thiocarboxylate. Cyclic thiocarboxylates can function as a linking group, for example, when an atom in the formed ring is linked to another group.

The term "carbamate" as used herein encompasses N-carbamate and O-carbamate.

The term "N-carbamate" describes an R"OC(=O)-NR'- end group or a -OC(=O)-NR'-linking group, as these phrases are defined hereinabove, with R' and R" as defined herein.

The term "O-carbamate" describes an -OC(=O)-NR'R" end group or an -OC(=O)-NR'- linking group, as these phrases are defined hereinabove, with R' and R" as defined herein.

A carbamate can be linear or cyclic. When cyclic, R' and the carbon atom are linked together to form a ring, in O-carbamate. Alternatively, R' and O are linked together to form a ring in N-carbamate. Cyclic carbamates can function as a linking group, for example, when an atom in the formed ring is linked to another group.

The term "carbamate" as used herein encompasses N-carbamate and O-carbamate.

The term "thiocarbamate" as used herein encompasses N-thiocarbamate and O-thiocarbamate.

The term "O-thiocarbamate" describes a -OC(=S)-NR'R" end group or a -OC(=S)-NR'- linking group, as these phrases are defined hereinabove, with R' and R" as defined herein.

The term "N-thiocarbamate" describes an R"OC(=S)NR'- end group or a -OC(=S)NR'-linking group, as these phrases are defined hereinabove, with R' and R" as defined herein.

Thiocarbamates can be linear or cyclic, as described herein for carbamates.

The term "dithiocarbamate" as used herein encompasses S-dithiocarbamate and N-dithiocarbamate.

The term "S-dithiocarbamate" describes a -SC(=S)-NR'R" end group or a -SC(=S)NR'- linking group, as these phrases are defined hereinabove, with R' and R" as defined herein.

The term "N-dithiocarbamate" describes an R"SC(=S)NR'- end group or a -SC(=S)NR'-linking group, as these phrases are defined hereinabove, with R' and R" as defined herein.

The term "urea", which is also referred to herein as "ureido", describes a -NR'C(=O)-NR"R‴ end group or a -NR'C(=O)-NR"- linking group, as these phrases are defined hereinabove, where R' and R" are as defined herein and R‴ is as defined herein for R' and R".

The term "thiourea", which is also referred to herein as "thioureido", describes a -NR'-C(=S)-NR"R‴ end group or a -NR'-C(=S)-NR"- linking group, with R', R" and R‴ as defined herein.

The term "amide" as used herein encompasses C-amide and N-amide.

The term "C-amide" describes a -C(=O)-NR'R" end group or a -C(=O)-NR'- linking group, as these phrases are defined hereinabove, where R' and R" are as defined herein.

The term "N-amide" describes a R'C(=O)-NR"- end group or a R'C(=O)-N- linking group, as these phrases are defined hereinabove, where R' and R" are as defined herein.

An amide can be linear or cyclic. When cyclic, R' and the carbon atom are linked together to form a ring, in C-amide, and this group is also referred to as lactam. Cyclic amides can function as a linking group, for example, when an atom in the formed ring is linked to another group.

The term "guanyl" describes a R'R"NC(=N)- end group or a -R'NC(=N)- linking group, as these phrases are defined hereinabove, where R' and R" are as defined herein.

The term "guanidine" describes a -R'NC(=N)-NR"R‴ end group or a - R'NC(=N)- NR"- linking group, as these phrases are defined hereinabove, where R', R" and R‴ are as defined herein.

The term "hydrazine" describes a -NR'-NR"R‴ end group or a -NR'-NR"- linking group, as these phrases are defined hereinabove, with R', R", and R‴ as defined herein.

As used herein, the term "hydrazide" describes a -C(=O)-NR'-NR"R‴ end group or a - C(=O)-NR'-NR"- linking group, as these phrases are defined hereinabove, where R', R" and R'" are as defined herein.

As used herein, the term "thiohydrazide" describes a -C(=S)-NR'-NR"R"' end group or a - C(=S)-NR' NR"- linking group, as these phrases are defined hereinabove, where R', R" and R'" are as defined herein.

As used herein, the term "alkylene glycol" describes a -O-[(CR'R")_{z}-O]_{y}-R‴ end group or a -O-[(CR'R")_{z}-O]_{y}- linking group, with R', R" and R"' being as defined herein, and with z being an integer of from 1 to 10, preferably, from 2 to 6, more preferably 2 or 3, and y being an integer of 1 or more. Preferably R' and R" are both hydrogen. When z is 2 and y is 1, this group is ethylene glycol. When z is 3 and y is 1, this group is propylene glycol. When y is 2-4, the alkylene glycol is referred to herein as oligo(alkylene glycol). When y is higher than 4, the alkylene glycol is referred to herein as poly(alkylene glycol).

The term "branching unit" as used herein describes a multi-radical, preferably aliphatic or alicyclic group. By "multi-radical" it is meant that the moiety has two or more attachment points such that it links between two or more atoms and/or groups or moieties.

In some embodiments, the branching unit is derived from a chemical moiety that has two, three or more functional groups. In some embodiments, the branching unit is a branched alkyl or is a cycloalkyl as defined herein.

As used herein and in the art, Storage Modulus (E') is defined according to ISO 6721-1, as representing a stiffness of a material as measured in dynamic mechanical analysis, and is proportional to the energy stored in a specimen during a loading cycle. In some embodiments, the Storage Modulus is determined as described in the Examples section that follows. In some embodiments, the Storage Modulus is determined according to ASTM D4605.

Herein, "Tg" refers to glass transition temperature defined as the location of the local maximum of the E" curve, where E" is the loss modulus of the material as a function of the temperature. Broadly speaking, as the temperature is raised within a range of temperatures containing the Tg temperature, the state of a material, particularly a polymeric material, gradually changes from a glassy state into a rubbery state.

Herein, "Tg range" is a temperature range at which the E" value is at least half its value (e.g., can be up to its value) at the Tg temperature as defined above.

Without wishing to be bound to any particular theory, it is assumed that the state of a polymeric material gradually changes from the glassy state into the rubbery within the Tg range as defined above. The lowest temperature of the Tg range is referred to herein as Tg(low) and the highest temperature of the Tg range is referred to herein as Tg(high).

In any of the embodiments described herein, the term "temperature higher than Tg" means a temperature that is higher than the Tg temperature, or, more preferably a temperature that is higher than Tg(high).

In some embodiments, the Tg is determined as described in the Examples section that follows.

As used herein, HDT refers to a temperature at which the respective material deforms under a predetermined load at some certain temperature. Suitable test procedures for determining the HDT of a material are the ASTM D-648 series, particularly the ASTM D-648-06 and ASTM D-648-07 methods. In some embodiments, HDT is determined at a pressure of 0.45 MPa.

Herein and in the art, the term "hardness" describes a resistance of a material to permanent indentation, when measured under the specified conditions. Shore A hardness, which also referred to as Hardness ShA or as Shore scale A hardness, for example, is determined following the ASTM D2240 standard using a digital Shore A hardness durometer. Shore 00 hardness, which also referred to as Hardness Sh00 or as Shore scale 00 hardness, for example, is determined following the ASTM D2240 standard using a digital Shore 00 hardness durometer. D, A and 00 are common scales of hardness values, and each is measured using a respective durometer.

As used herein, the term "Izod impact resistance" refers to the loss of energy per unit of thickness following an impact force applied to the respective formulation or combination of formulations. Suitable test procedures for determining the Izod impact resistance of a formulation or combination of formulations are the ASTM D-256 series, particularly the ASTM D-256-06 series. An exemplary procedure for determining the impact resistance, which is particularly useful when the AM comprises three-dimensional printing is as follows. A test specimen is printed with a notch instead of cutting the notch after the specimen is printed. The orientation of the specimen on the tray is vertical, for example, in the Z-Y plane (referred to herein as "orientation F").

Herein and in the art "elongation at break", which is also referred to in the art as elongation at failure, ε_{R}, is determined as the maximal strain (elongation) which can occur (upon application of tensile stress equal to the ultimate tensile strength) before failure of the tested material occurs (e.g., rupture or nicking).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

### EXAMPLES

Reference is now made to the following examples, which together with the above descriptions illustrate some embodiments of the invention in a non-limiting fashion.

### EXAMPLE 1

### Modeling Material Formulations

According to some embodiments of the present invention, the modeling material formulations comprise one or more multi-functional (e.g., di- or tri-) polyisocyanate, preferably one or more non-aromatic polyisocyanate materials and one or more aromatic multi-functional (e.g., di-) polyamine.

Tables 1 and 2 present exemplary multi-functional isocyanates (Table 1) and exemplary multi-functional aromatic amines (Table 2) that are usable in the modeling material formulations described herein.

*For both tables 1 and 2, "EMW" means "Equivalent Molecular Weight", or "equivalent weight" and relates to the molecular weight of the respective material or mixture of materials divided by the number of functional groups of the respective material. In case a mixture of materials is used, EMW stands for each material separately, or is calculated per the relative portion of each material in the mixture.

The materials presented in Tables 1 and 2 can be used as a single-part modeling material formulation or as a multi-part, e.g., two-part modeling material formulation in which part A comprises one or more of the materials presented in Table 1 and part B comprises one or more of the materials presented in Table 2.

The modeling material formulation can comprise also a reactive (DVA) or non-reactive (HAc) diluent, as defined herein.

**DVA** = 1,4-Cyclohexanedimethanol divinyl ether (di-functional), obtainable, for example, from Sigma-Aldrich, and having the following Formula:

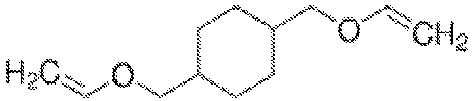

**HAc** = Hexyl acetate, obtainable, for example, from Sigma-Aldrich, and having the following Formula:

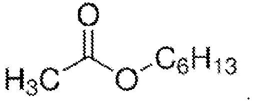

The modeling material formulation can comprise also a thiol or an alcohol, for example, a dithiol material marketed as Thiocure GDMP by BrunoBock, and having the following formula:

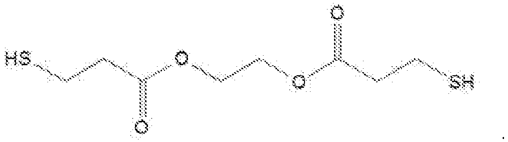

Preferably, Part A and Part B formulations are such that feature a difference in surface tension of at least 5 dyne/cm, preferably of from about 5 dyne/cm to about 30 dyne/cm, or from about 10 dyne/cm to about 30 dyne/cm, or from about 10 dyne/cm to about 20 dyne/cm. In some embodiments, Part A sub-formulation features a surface tension of 40 dyne/cm or higher, and Part B sub-formulation features a surface tension lower than 30 dyne/cm. Surface tension values of each sub-formulation can be manipulated by addition of suitable surface active agents that reduce/increase the surface tension of the respective formulation or sub-formulation.

**Table 1**

| **A** | **Trade name (company)** | **Formula** | **Functional groups** | **Viscosity 25°C (cps)** | **EMW*** |
|---|---|---|---|---|---|
| **A1** | Desmodur XP2840 (Covestro) | 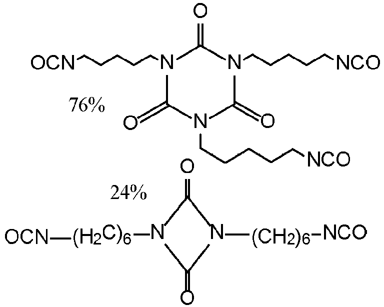 | 3.0 | 500 | 183 |
| **A2** | Tolonate HDT-LV2 (Vencorex) | 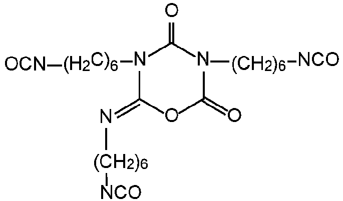 | 3 | 600 | 183 |
| **A3** | Tolonate^{™} XFLO-100 (Vencorex) | 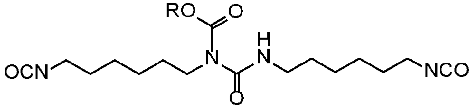 | 2 | 140 | 325 |
| **A4** | Desmodur N3400 (Covestro) | 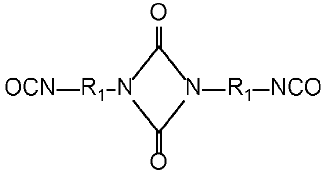 | 2.5 | 150 | 195 |
| **A5** | Stabio D-370N (Mitsui) | 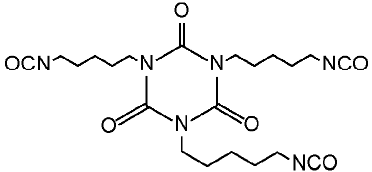 | >3 | 2,000 | 155 |
| **A6** | FORTIMO 1,4-H6XDI (Mitsui) | 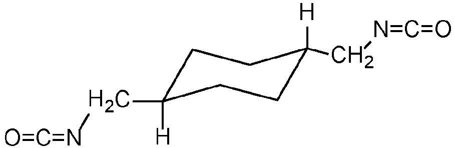 | 2 | ND | 98 |
| **A8** | Desmodur VL (Bayer) | 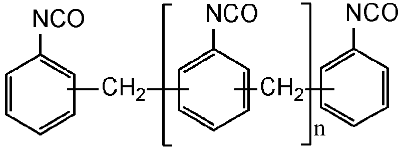 | >2 | 90 | 133 |

**Table 2**

| **B** | **Trade name (company)** | **Formula** | **Functional groups** | **Viscosity 25°C (cps)** | **EMW*** |
|---|---|---|---|---|---|
| **B1** | Ethacure 420 (Albemarle) | 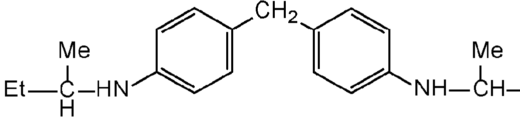 | 2 | 373 | 155 |
| **B2** | Ethacure 300 (Albemarle) | 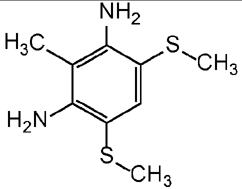 | 2 | 420 | 107 |
| **B3** | Ethacure 100-LC (Albemarle) | 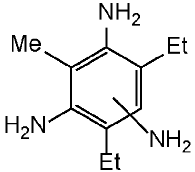 | 2 | 135 | 89 |
| **B5** | 4,4'-methylene-bis(3-chloro-2,6-diethylaniline); MCDEA (BrunoBock) | 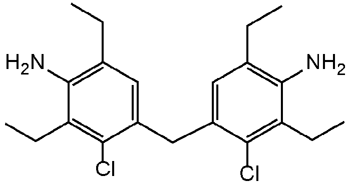 | 2 | - | 190 |

Exemplary two-part formulations made of materials such as presented in Tables 1 and 2, optionally in combination with DVA, HAc and/or a dithiol as shown hereinabove, are presented in Table 3, along with the viscosity of each part, as measured at 68 °C using a Brookfield viscometer.

**Table 3**

| **Formulation No.** | **Part A (% wt.)** | **Viscosity*** | **Part B (% wt.)** | **Viscosity*** |
|---|---|---|---|---|
| **1** | A1 (100) | ++++ | B1 (100) | +++ |
| **2** | A2 (100) | ++++ | B1 (100) | +++ |
| **3** | A1 (100) | ++++ | B2 (100) | + |
| **4** | A2 (100) | ++++ | B2 (100) | + |
| **5** | A1 (100) | ++++ | B1:B2 (50:50) | + |
| **6** | A2 (100) | ++++ | B1:B2 (50:50) | + |
| **7** | A3 (100) | ++ | B2 (100) | + |
| **8** | A2:A3 (20:80) | ++ | B2 (100) | + |
| **9** | A3 (100) | ++ | B3 (100) | + |
| **10** | A3 (100) | ++ | B2:B3 (47:53) | + |
| **11** | A2:A3 (20:80) | ++ | B2:B3 (47:53) | + |
| **12** | A2:A3 (40:60) | ++ | B2 (100) | + |
| **13** | A2:A3 (60:40) | ++ | B2 (100) | + |
| **14** | A2:A3 (80:20) | +++ | B2 (100) | + |
| **15** | A2:A3 (40:60) | ++ | B2:B3 (50:50) | + |
| **16** | A2:A3 (40:60) | ++ | B2:B3 (65:35) | + |
| **17** | A2:HAc (77:23) | + | B5:B3:HAc (25:60:15) | + |
| **18** | A5:A6 (75:25) | + | B2 (100) | + |

| | | | | |
|---|---|---|---|---|
| * Viscosity: + = < 30 cps; ++ = 30 - 60 cps; +++ = 60 - 90 cps; ++++ = above 90 cps. | | | | |

### EXAMPLE 2

### Performance

### Mold Preparations:

Two-part formulations as presented in Table 3 were mixed, at a weight ratio that corresponds to a mol ratio of from 1:1 to 1.2:1 between polyisocyanate materials and polyamine materials, in a silicon mold and cured at 130 °C for 16 hours. A gel was formed within seconds to minutes, and hardened to provide a hard transparent yellowish thermoset plastic material, before curing.

Table 4 below presents the properties of the obtained hardened (cured) material, measured and presented as follows:
Izod Impact (J/m) was measured according to ASTM D256.
+ = < 50; ++ = 50-100; +++ = 100-150; ++++ = >150
Tg (°C) was determined from DMA measurements performed according to ASTM D4065. + = < 50; ++ = 50-100; +++ = 100-150; ++++ = >150
Elongation at break was measured according to ASTM D638.
+ = < 10; ++ = 10-20; +++ = 20-100; ++++ = >100
ND = Not Determined

**Table 4**

| **Formulation No.** | **Izod Impact** | **Tg** | **Elongation at Break** |
|---|---|---|---|
| **1** | ++ | ++ | ND |
| **2** | ++ | ++ | ND |
| **3** | + | ++++ | + |
| **4** | + | ++++ | ND |
| **5** | + | +++ | ND |
| **6** | + | +++ | ND |
| **7** | ++++ | ND | +++ |
| **8** | +++ | ND | +++ |
| **9** | ND | ND | ND |
| **10** | ND | ND | ND |
| **11** | ND | ND | ND |
| **12** | ND | ND | ND |
| **13** | ND | +++ | ND |
| **14** | ND | ++++ | ND |
| **15** | ND | + | ND |
| **16** | ND | ND | ND |
| **17** | +++ | +++ | ++ |
| **18** | + | ++++ | + |

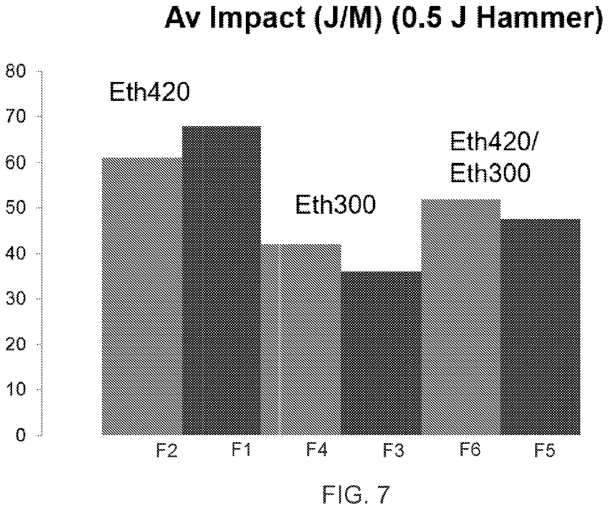

FIG. 7 is a bar graph showing the Izod Impact of the following formulations presented in Tables 3 and 4: Formulation 2 (Eth420+TolonateLV2); Formulation 1 (ETH420+Desmodur XP2840); Formulation 4 (Eth300+TolonateLV2); Formulation 3 (ETH300+Desmodur XP2840); Formulation 6 (Eth420/Eth300+TolonateLV2); and Formulation 5 (ETH420/Eth300+Desmodur XP2840).

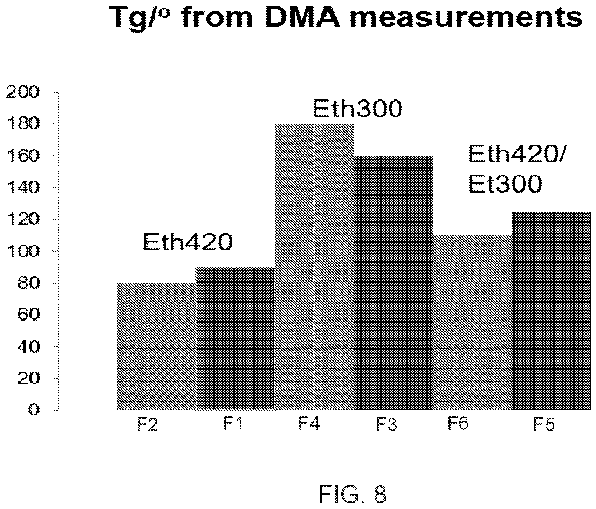

FIG. 8 is a bar graph showing the Tg values, as determined from DMA measurements, of the following formulations presented in Tables 3 and 4: Formulation 2 (Eth420+TolonateLV2); Formulation 1 (ETH420+Desmodur XP2840); Formulation 4 (Eth300+TolonateLV2); Formulation 3 (ETH300+Desmodur XP2840); Formulation 6 (Eth420/Eth300+TolonateLV2); and Formulation 5 (ETH420/Eth300+Desmodur XP2840).

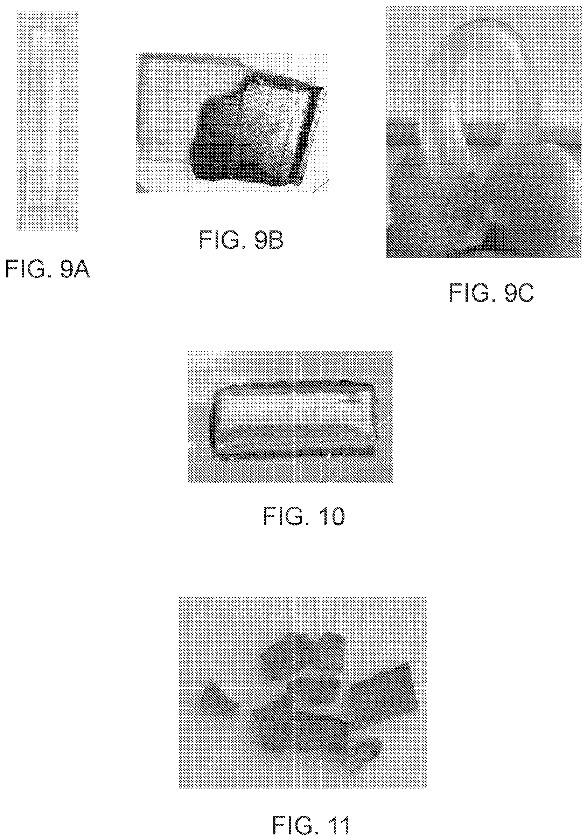

FIGs. 9A-C present images of objects made of Formulation 2 (FIG. 9A), Formulation 3 (FIG. 9B) and Formulation 7 (FIG. 9C).

The data presented on Table 4 and in FIGs. 5A-B, 6A-B and 7 show that the properties of the obtained object or of portions thereof can be manipulated by, *inter alia,* selecting the average functionality of the isocyanate material(s) and/or by selecting linear or cyclic isocyanate material(s) and/or by selecting a multi-functional amine with primary and/or secondary amines.

Thus, for example, higher toughness is obtained when Part B comprises a multi-functional amine with secondary amines and higher MW; Higher Tg is obtained when Part B comprises a multi-functional amine with primary amines and lower MW, and more elastic materials are obtained when Part A comprises an aliphatic isocyanate with lower functionality.

Higher toughness may also be imparted by curable materials ion Part A and/or Part B that feature flexible chains (e.g., alkylene chains of 4 or more carbon atoms). Higher rigidity may also be obtained when the degree of cross-linking (number of functional groups) or the proportion of aromatic/non-aromatic materials in Part A and/or Part B is increased.

### 3D Inkjet Printing:

The printing of 3D models was generally performed on Stratasys (Objet) Connex2 3D inkjet printer, equipped with Ricoh E1 or E6 printheads operated at 68 °C, thermoregulated printing tray (optional), and Ceramic Infrared Heater (P=500W, model T-HTS/2, Elstein) (optional), unless otherwise indicated.

Printing was performed in a dual DM jetting mode, dispending Part A and Part B from different printheads or nozzles, at a mol ratio ranging from about 1.2:1 to about 1:1 between a material presented in Table 1 (included in Part A) and a material presented in Table 2 (included in Part B), as explained hereinabove. The indicated mol ratio is obtained by controlling a weight ratio between Part A and Part B at each voxel block, which, in turn, is obtained by controlling the drop's weight and/or number.

For example, Part A and Part B are prepared such that the above mol ratio is obtained when a drop of Part A is reacted with a drop of Part B, both drops having the same size/weight. In cases where the above mol ratio cannot be reached when reacting one drop of Part A with one drop of Part B, several drops of either Part A or Part B are jetted in a voxel block (i.e. group of close proximity voxels). Alternatively, the size/weight of the drops of either Part A and/or Part B may be distinct such that the desired mol ratio is obtained.

As shown in Tables 3 and 4 above, while Part B formulations are typically characterized by viscosities and surface tension (not shown) at the jetting temperature (about 68 °C) suitable for common inkjet printing (e.g., viscosity of about 30 cps or lower), some Part A formulations (e.g., those containing materials A1 and/or A2) feature higher viscosities at the jetting temperature (e.g., higher than 60, or higher than 80, cps). In this case, printheads enabling high viscosity jetting may be used. Exemplary such printheads include Xaar printheads with High Laydown [HL] technology, which enable using formulations featuring a viscosity higher than 50 centipoises and as high as 100 centipoises. Alternatively, or in addition, printheads that enable circulation of formulation may be used. Otherwise, formulations comprising a reactive or non-reactive diluent as described herein, which feature a viscosity of 30 cps or lower, are used, and the solvent is evaporated upon dispensing using two IR-lamp scanning to promote a layer-by-layer solvent evaporation.

FIGs. 10 and 11 present images of objects prepared by 3D inkjet printing in a DM mode of the two-part formulation 17 (see, Table 3). Jetting temperature was 68 °C, weight ratio of Part A and Part B in each voxel block was 67:33. Tray temperature was room temperature (RT), and IR scanning was performed at 4 scans per layer. Absence of the non-reactive diluent HAc after curing was determined by absence of the respective odor.

FIG. 10 presents a photograph of an object printed in a DM mode using Formula 17, as presented in Table 3, after exposure to a curing condition (IR irradiation, 4 scans per layer).

FIG. 11 presents a photograph of an object printed in a DM mode using Formula 17, as presented in Table 3, after exposure to a curing condition and to a post-curing treatment at 130 °C for 16 hours.

The invention is defined by the appended claims.

Citation or identification of any reference in this application shall not be construed as an admission that such reference is available as prior art to the present invention. To the extent that section headings are used, they should not be construed as necessarily limiting.

## Claims

1. A method of additive manufacturing of a three-dimensional object which comprises, in at least a portion thereof, a polyurea-containing material, the method comprising sequentially forming a plurality of layers in a configured pattern corresponding to the shape of the object, thereby forming the object,
wherein said formation of each of at least a few of said layers comprises dispensing a multi-part modeling material formulation which comprises a first sub-formulation comprising at least one isocyanate-containing material and a second sub-formulation comprising at least one amine-containing material,
wherein said at least one isocyanate-containing material comprises at least 50% by weight of the total weight of said first sub-formulation of at least one aliphatic, alicyclic and/or heteroalicyclic polyisocyanate material;
wherein said at least one amine-containing material comprises at least 50% by weight of the total weight of said second sub-formulation of at least one aromatic polyamine material;
wherein said additive manufacturing is three-dimensional inkjet printing; and
wherein said first sub-formulation is dispensed from a first printing head, nozzle and/or array of nozzles and said second sub-formulation is dispensed from a second printing head, nozzle and/or array of nozzles.

2. The method of claim 1, wherein said at least one aliphatic, alicyclic and/or heteroalicyclic polyisocyanate material features an average number of isocyanate groups of at least 2.

3. The method of claim 1 or 2, wherein said at least one isocyanate-containing material further comprises at least one aromatic polyisocyanate material and/or at least one mono-functional isocyanate material.

4. The method according to any one of claims 1-3, wherein said at least one aromatic polyamine material features an average number of amine groups of at least 2.

5. The method of any one of claims 1-4, wherein said at least one amine-containing material further comprises at least one of an aliphatic polyamine material, an alicyclic polyamine material and a mono-functional amine.

6. The method of any one of claims 1-5, wherein said multi-part modeling material formulation further comprises an additional material, said additional material being non-reactive towards said at least one isocyanate-containing material and said at least one amine-containing material.

7. The method of claim 6, wherein said additional material is a multi-functional curable material which features at least one of:
a viscosity at room temperature of less than 15 mPa·second (centipoises) or less than 10 mPa·second (centipoises), as determined using Brookfield rheometer; and
a flash point, determined according to ISO TR 29662, at least 10 °C higher than a temperature applied to the formulation during the method.

8. The method of any one of claims 1-7, wherein said multi-part modeling material formulation further comprises a thiol-containing material and/or a hydroxy-containing material.

9. The method of claim 1, wherein said first sub-formulation further comprises one or more of:
an aromatic polyisocyanate material, in an amount of no more than 40 % by weight of said first sub-formulation;
a monofunctional isocyanate material, in an amount of no more than 40 % by weight of said first sub-formulation; and
an additional material being non-reactive towards said polyisocyanate material and said aromatic polyamine material, in an amount of no more than 25 % by weight of the total weight of said first sub-formulation.

10. The method of claim 1, wherein said second sub-formulation further comprises one or more of:
an aliphatic and/or alicyclic polyamine material, in an amount of no more than 40 % by weight of said second sub-formulation;
a monofunctional amine material, in an amount of no more than 40 % by weight of the formulation;
an additional material being non-reactive towards said at least one polyamine material, in an amount of no more than 40 % by weight of the total weight of said second sub-formulation; and
a thiol-containing material and/or a hydroxy-containing material, in an amount of not more than 25 % by weight of the total weight of said second sub-formulation.

11. The method of any one of claims 1-10, wherein said dispensing is such that a mol ratio of an average number of isocyanate groups in said at least one isocyanate-containing material and an average number of amine groups in polyamine materials in said at least one amine-containing material is from 1.2:1 to 1:1.2.

12. The method of any one of claims 1-11, wherein each of said first and said second sub-formulations features a viscosity of no more than 90 mPa·second (centipoises) as determined using Brookfield rheometer at 68 °C.

13. A three-dimensional object comprising, in at least a portion thereof, a polyurea material, the object being prepared by the method of any one of claims 1-12.

14. The object of claim 13, comprising in at least one portion thereof a first polyurea material and in at least one another portion thereof a second polyurea material, wherein said first and second polyurea materials differ from one another by at least one mechanical property.

15. A kit comprising the multi-part modeling material formulation which comprises a first sub-formulation and a second sub-formulation as described in any one of claims 1-11.

## Patentansprüche

1. Verfahren zur generativen Fertigung eines dreidimensionalen Objekts, das in mindestens einem Teil davon ein Polyharnstoff-haltiges Material umfasst, wobei das Verfahren Ausbilden einer Vielzahl von Schichten nacheinander in einem konfigurierten Muster entsprechend der Form des Objekts umfasst, wodurch das Objekt ausgebildet wird,
wobei die Ausbildung jeder von mindestens einigen der Schichten Ausgeben einer mehrteiligen Modellierungsmaterialformulierung umfasst, die eine erste Unterformulierung, die mindestens ein Isocyanat-haltiges Material umfasst, und eine zweite Unterformulierung, die mindestens ein Amin-haltiges Material umfasst, umfasst,
wobei das mindestens eine Isocyanat-haltige Material mindestens 50 Gew.-% des Gesamtgewichts der ersten Unterformulierung mindestens eines aliphatischen, alicyclischen und/oder heteroalicyclischen Polyisocyanatmaterials umfasst;
wobei das mindestens eine Amin-haltige Material mindestens 50 Gew.-% des Gesamtgewichts der zweiten Unterformulierung mindestens eines aromatischen Polyaminmaterials umfasst;
wobei die generative Fertigung dreidimensionales Tintenstrahldrucken ist; und
wobei die erste Unterformulierung aus einem ersten Druckkopf, einer ersten Düse und/oder einer ersten Düsenanordnung ausgegeben wird und die zweite Unterformulierung aus einem zweiten Druckkopf, einer zweiten Düse und/oder einer zweiten Düsenanordnung ausgegeben wird.

2. Verfahren nach Anspruch 1, wobei das mindestens eine aliphatische, alicyclische und/oder heteroalicyclische Polyisocyanatmaterial über eine durchschnittliche Anzahl von Isocyanatgruppen von mindestens 2 verfügt.

3. Verfahren nach Anspruch 1 oder 2, wobei das mindestens eine Isocyanat-haltige Material ferner mindestens ein aromatisches Polyisocyanatmaterial und/oder mindestens ein monofunktionelles Isocyanatmaterial umfasst.

4. Verfahren gemäß einem der Ansprüche 1-3, wobei das mindestens eine aromatische Polyaminmaterial über eine durchschnittliche Anzahl von Amingruppen von mindestens 2 verfügt.

5. Verfahren nach einem der Ansprüche 1-4, wobei das mindestens eine Amin-haltige Material ferner mindestens eines von einem aliphatischen Polyaminmaterial, einem alicyclischen Polyaminmaterial und einem monofunktionellen Amin umfasst.

6. Verfahren nach einem der Ansprüche 1-5, wobei die mehrteilige Modellierungsmaterialformulierung ferner ein zusätzliches Material umfasst, wobei das zusätzliche Material gegenüber dem mindestens einen Isocyanat-haltigen Material und dem mindestens einen Amin-haltigen Material nicht reaktiv ist.

7. Verfahren nach Anspruch 6, wobei das zusätzliche Material ein multifunktionelles härtbares Material ist, das mindestens eines von Folgenden aufweist:
eine Viskosität bei Raumtemperatur von weniger als 15 mPa · Sekunde (Zentipoise) oder weniger als 10 mPa · Sekunde (Zentipoise), wie unter Verwendung des Brookfield-Rheometers bestimmt; und
einen Flammpunkt, bestimmt gemäß ISO TR 29662, der mindestens 10 °C höher ist als eine Temperatur, die während des Verfahrens auf die Formulierung angewendet wird.

8. Verfahren nach einem der Ansprüche 1-7, wobei die mehrteilige Modellierungsmaterialformulierung ferner ein Thiol-haltiges Material und/oder ein Hydroxy-haltiges Material umfasst.

9. Verfahren nach Anspruch 1, wobei die erste Unterformulierung ferner eines oder mehrere der folgenden umfasst:
ein aromatisches Polyisocyanatmaterial in einer Menge von nicht mehr als 40 Gew.-% der ersten Unterformulierung;
ein monofunktionelles Isocyanatmaterial in einer Menge von nicht mehr als 40 Gew.-% der ersten Unterformulierung; und
ein zusätzliches Material, das gegenüber dem Polyisocyanatmaterial und dem aromatischen Polyaminmaterial nicht reaktiv ist, in einer Menge von nicht mehr als 25 Gew.-% des Gesamtgewichts der ersten Unterformulierung.

10. Verfahren nach Anspruch 1, wobei die zweite Unterformulierung ferner eines oder mehrere der folgenden umfasst:
ein aliphatisches und/oder alicyclisches Polyaminmaterial in einer Menge von nicht mehr als 40 Gew.-% der zweiten Unterformulierung;
ein monofunktionelles Aminmaterial in einer Menge von nicht mehr als 40 Gew.-% der Formulierung;
ein zusätzliches Material, das gegenüber dem mindestens einen Polyaminmaterial nicht reaktiv ist, in einer Menge von nicht mehr als 40 Gew.-% des Gesamtgewichts der zweiten Unterformulierung; und
ein Thiol-haltiges Material und/oder ein Hydroxy-haltiges Material in einer Menge von nicht mehr als 25 Gew.-% des Gesamtgewichts der zweiten Unterformulierung.

11. Verfahren nach einem der Ansprüche 1-10, wobei das Ausgeben derart ist, dass ein Molverhältnis einer durchschnittlichen Anzahl von Isocyanatgruppen in dem mindestens einen Isocyanat-haltigen Material und einer durchschnittlichen Anzahl von Amingruppen in Polyaminmaterialien in dem mindestens einen Amin-haltigen Material von 1,2:1 bis 1:1,2 beträgt.

12. Verfahren nach einem der Ansprüche 1-11, wobei jede von der ersten und der zweiten Unterformulierung eine Viskosität von nicht mehr als 90 mPa · Sekunde (Zentipoise) aufweist, wie unter Verwendung des Brookfield-Rheometers bei 68 °C bestimmt.

13. Dreidimensionales Objekt, umfassend in mindestens einem Teil davon ein Polyharnstoffmaterial, wobei das Objekt durch das Verfahren nach einem der Ansprüche 1-12 hergestellt ist.

14. Objekt nach Anspruch 13, umfassend in mindestens einem Teil davon ein erstes Polyharnstoffmaterial und in mindestens einem anderen Teil davon ein zweites Polyharnstoffmaterial, wobei sich das erste und das zweite Polyharnstoffmaterial in mindestens einer mechanischen Eigenschaft voneinander unterscheiden.

15. Kit, umfassend die mehrteilige Modellierungsmaterialformulierung, die eine erste Unterformulierung und eine zweite Unterformulierung, wie in einem der Ansprüche 1-11 beschrieben, umfasst.

## Revendications

1. Procédé de fabrication additive d'un objet tridimensionnel qui comprend, dans au moins une partie de celui-ci, un matériau contenant une polyurée, le procédé comprenant la formation séquentielle d'une pluralité de couches selon un motif configuré correspondant à la forme de l'objet, formant ainsi l'objet,
dans lequel ladite formation de chacune d'au moins quelques-unes desdites couches comprend la distribution d'une formulation de matériau de modélisation en plusieurs parties qui comprend une première sous-formulation comprenant au moins un matériau contenant un isocyanate et une seconde sous-formulation comprenant au moins un matériau contenant une amine,
dans lequel ledit au moins un matériau contenant un isocyanate comprend au moins 50 % en poids du poids total de ladite première sous-formulation d'au moins un matériau polyisocyanate aliphatique, alicyclique et/ou hétéroalicyclique ;
dans lequel ledit au moins un matériau contenant une amine comprend au moins 50 % en poids du poids total de ladite seconde sous-formulation d'au moins un matériau polyamine aromatique ;
dans lequel ladite fabrication additive est une impression à jet d'encre tridimensionnelle ; et
dans lequel ladite première sous-formulation est distribuée à partir d'une première tête d'impression, d'une buse et/ou d'un réseau de buses et ladite seconde sous-formulation est distribuée à partir d'une seconde tête d'impression, d'une buse et/ou d'un réseau de buses.

2. Procédé de la revendication 1, dans lequel ledit au moins un matériau polyisocyanate aliphatique, alicyclique et/ou hétéroalicyclique présente un nombre moyen de groupes isocyanate d'au moins 2.

3. Procédé de l'une des revendications 1 ou 2, dans lequel ledit au moins un matériau contenant un isocyanate comprend en outre au moins un matériau polyisocyanate aromatique et/ou au moins un matériau isocyanate monofonctionnel.

4. Procédé selon l'une quelconque des revendications 1 à 3, dans lequel ledit au moins un matériau polyamine aromatique présente un nombre moyen de groupes amine d'au moins 2.

5. Procédé de l'une quelconque des revendications 1 à 4, dans lequel ledit au moins un matériau contenant une amine comprend en outre au moins l'un d'un matériau polyamine aliphatique, d'un matériau polyamine alicyclique et d'une amine monofonctionnelle.

6. Procédé de l'une quelconque des revendications 1 à 5, dans lequel ladite formulation de matériau de modélisation en plusieurs parties comprend en outre un matériau supplémentaire, ledit matériau supplémentaire étant non réactif vis-à-vis dudit au moins un matériau contenant un isocyanate et dudit au moins un matériau contenant une amine.

7. Procédé de la revendication 6, dans lequel ledit matériau supplémentaire est un matériau durcissable multifonctionnel qui présente au moins l'un parmi :
une viscosité à température ambiante inférieure à 15 mPa·seconde (centipoises) ou inférieure à 10 mPa·seconde (centipoises), telle que déterminée à l'aide d'un rhéomètre Brookfield ; et
un point d'éclair, déterminé selon la norme ISO TR 29662, supérieur d'au moins 10 °C à une température appliquée à la formulation pendant le procédé.

8. Procédé de l'une quelconque des revendications 1 à 7, dans lequel ladite formulation de matériau de modélisation en plusieurs parties comprend en outre un matériau contenant un thiol et/ou un matériau contenant un hydroxy.

9. Procédé de la revendication 1, dans lequel ladite première sous-formulation comprend en outre un ou plusieurs parmi :
un matériau polyisocyanate aromatique, en une quantité ne dépassant pas 40 % en poids de ladite première sous-formulation ;
un matériau isocyanate monofonctionnel, en une quantité ne dépassant pas 40 % en poids de ladite première sous-formulation ; et
un matériau supplémentaire non réactif vis-à-vis dudit matériau polyisocyanate et dudit matériau polyamine aromatique, en une quantité ne dépassant pas 25 % en poids du poids total de ladite première sous-formulation.

10. Procédé de la revendication 1, dans lequel ladite seconde sous-formulation comprend en outre un ou plusieurs parmi :
un matériau polyamine aliphatique et/ou alicyclique, en une quantité ne dépassant pas 40 % en poids de ladite seconde sous-formulation ;
un matériau amine monofonctionnelle, en une quantité ne dépassant pas 40 % en poids de la formulation ;
un matériau supplémentaire non réactif vis-à-vis dudit au moins un matériau polyamine, en une quantité ne dépassant pas 40 % en poids du poids total de ladite seconde sous-formulation ; et
un matériau contenant un thiol et/ou un matériau contenant un hydroxy, en une quantité ne dépassant pas 25 % en poids du poids total de ladite seconde sous-formulation.

11. Procédé de l'une quelconque des revendications 1 à 10, dans lequel ladite distribution est telle qu'un rapport molaire d'un nombre moyen de groupes isocyanate dans ledit au moins un matériau contenant un isocyanate et d'un nombre moyen de groupes amine dans des matériaux polyamine dans ledit au moins un matériau contenant une amine est de 1,2:1 à 1:1,2.

12. Procédé de l'une quelconque des revendications 1 à 11, dans lequel chacune desdites première et seconde sous-formulations présente une viscosité ne dépassant pas 90 mPa·seconde (centipoises) telle que déterminée à l'aide d'un rhéomètre Brookfield à 68 °C.

13. Objet tridimensionnel comprenant, dans au moins une partie de celui-ci, un matériau polyurée, l'objet étant préparé par le procédé de l'une quelconque des revendications 1 à 12.

14. Objet de la revendication 13, comprenant dans au moins une partie de celui-ci un premier matériau polyurée et dans au moins une autre partie de celui-ci un second matériau polyurée, dans lequel lesdits premier et second matériaux polyurée diffèrent l'un de l'autre par au moins une propriété mécanique.

15. Kit comprenant la formulation de matériau de modélisation en plusieurs parties qui comprend une première sous-formulation et une seconde sous-formulation telles que décrites dans l'une quelconque des revendications 1 à 11.
